# EUROPEAN PATENT APPLICATION

(11) **EP 4 387 217 A1**
(43) Date of publication of application: **19.06.2024**
(21) Application number: 22869060.8
(22) Date of filing: 05.09.2022

(54) **THREE-AXIS OPTICAL IMAGE STABILIZATION SYSTEM, METHOD AND APPARATUS BASED ON IMAGE SENSOR DISPLACEMENT**

(30) Priority: 18.09.2021 CN 202111112550
(71) Applicant: Huawei Technologies Co., Ltd., Shenzhen, Guangdong 518129 (CN)
(72) Inventor: WANG, Wei, Shenzhen, Guangdong 518129 (CN); QIN, Shixin, Shenzhen, Guangdong 518129 (CN); HUANG, Changfu, Shenzhen, Guangdong 518129 (CN); LIN, WeiChih, Shenzhen, Guangdong 518129 (CN); HE, Yingyong, Shenzhen, Guangdong 518129 (CN)
(74) Representative: Maiwald GmbH
(86) International application number: PCT/CN2022/117045
(87) International publication number: WO 2023/040689

(57) **Abstract**

Embodiments of this application disclose a three-axis optical image stabilization system and method based on image sensor displacement, and an apparatus. First shake data in a first direction, second shake data in a second direction, and third shake data in a third direction are collected by using a sensor. Then, a controller obtains a displacement amount of an image sensor in a first axial direction, a displacement amount of the image sensor in a second axial direction, and a displacement amount of the image sensor in a third axial direction based on the first shake data, the second shake data, and the third shake data. Finally, a driver chip drives, by using an optical image stabilization motor based on the displacement amount of the image sensor in the first axial direction, the displacement amount of the image sensor in the second axial direction, and the displacement amount of the image sensor in the third axial direction, the image sensor to shift in the first axial direction, the second axial direction, and the third axial direction, to implement optical image stabilization in three directions: a pitch direction, a yaw direction, and a roll direction.

## Description

This application claims priority to Chinese Patent Application No. 202111112550.9, filed with the China National Intellectual Property Administration on September 18, 2021 and entitled "THREE-AXIS OPTICAL IMAGE STABILIZATION SYSTEM AND METHOD BASED ON IMAGE SENSOR DISPLACEMENT AND APPARATUS", which is incorporated herein by reference in its entirety.

### TECHNICAL FIELD

This application relates to the field of image technologies, and in particular, to a three-axis optical image stabilization system and method based on image sensor displacement, a camera module, an electronic device, and a computer-readable storage medium.

### BACKGROUND

In the field of image technologies, image stabilization modes may be classified into electronic image stabilization (Electronic Image Stabilization, EIS) and optical image stabilization (Optical Image Stabilization, OIS). The OIS compensates for body shake by driving motion of a movable component like a lens or a photosensitive element.

Based on different movable components, the OIS may include lens-shift optical image stabilization (Lens-shift Optical Image Stabilization, LS OIS) and image sensor-shift OIS (Sensor-shift Optical Image Stabilization, SS OIS). A process of the image sensor-shift OIS includes: collecting shake data in a yaw (yaw) direction and a pitch (pitch) direction by using a gyroscope; and driving, by a driver chip based on the shake data, the image sensor to perform shift in an X-axis direction and/or a Y-axis direction by using an OIS motor, to perform shake compensation in the yaw direction and/or the pitch direction.

However, in a current image sensor-shift OIS solution, usually, only dual-axis optical image stabilization can be implemented.

### SUMMARY

This application provides a three-axis optical image stabilization system and method based on image sensor displacement, a camera module, an electronic device, and a computer-readable storage medium, to implement three-axis optical image stabilization based on image sensor displacement.

Embodiments of this application provide a three-axis optical image stabilization system and method based on image sensor displacement, a camera module, an electronic device, and a computer-readable storage medium, to implement three-axis optical image stabilization based on image sensor displacement.

According to a first aspect, an embodiment of this application provides a three-axis optical image stabilization system based on image sensor displacement, where the system includes a sensor, a controller, a driver chip, and an optical image stabilization motor.

The sensor is configured to collect first shake data in a first direction, second shake data in a second direction, and third shake data in a third direction.

The controller is configured to obtain a displacement amount of an image sensor in a first axial direction, a displacement amount of the image sensor in a second axial direction, and a displacement amount of the image sensor in a third axial direction based on the first shake data, the second shake data, and the third shake data.

The driver chip is configured to separately drive, by using the optical image stabilization motor based on the displacement amount of the image sensor in the first axial direction, the displacement amount of the image sensor in the second axial direction, and the displacement amount of the image sensor in the third axial direction, the image sensor to shift in each axial direction.

The optical image stabilization motor includes a mover of the image sensor, a magnet, a first coil, a second coil, and a third coil, the first coil is disposed on a first side of the mover of the image sensor, the second coil is disposed on a second side of the mover of the image sensor, the third coil is disposed on a third side of the mover of the image sensor, the first side and the second side are opposite sides, and the third side and the first side are adjacent sides, and the magnet is configured to generate a magnetic field.

After the first coil, the second coil, and the third coil are energized, an acting force acting on the mover of the image sensor is generated under an action of the magnetic field, to push the mover of the image sensor to shift in each axial direction. The mover of the image sensor is connected to the image sensor, and the image sensor moves as the mover of the image sensor moves.

It can be learned from the foregoing that the first-side coil, the second-side coil, and the third-side coil in the optical image stabilization motor are used to push the image sensor to move in the first axial direction, the second axial direction, and the third axial direction, to perform shake compensation in the first axial direction, the second axial direction, and the third axial direction, to implement three-axis optical image stabilization.

For example, the first direction, the second direction, and the third direction may be respectively a pitch (pitch) direction, a yaw (yaw) direction, and a roll (roll) direction.

In some possible implementations of the first aspect, the driver chip is specifically configured to:
apply a first current signal to the first coil based on the displacement amount in the first axial direction, so that the first coil generates, under the action of the magnetic field, a first Lorentz force acting on the mover of the image sensor, where the first Lorentz force is used to drive the mover of the image sensor to shift in the first axial direction;
apply a second current signal to the second coil based on the displacement amount in the second axial direction, so that the second coil generates, under the action of the magnetic field, a second Lorentz force acting on the mover of the image sensor, where the second Lorentz force is used to generate a rotating torque to drive the mover of the image sensor to rotate in the second axial direction; and
apply a third current signal to the third coil based on the displacement amount in the third axial direction, so that the third coil generates, under the action of the magnetic field, a third Lorentz force acting on the mover of the image sensor, where the third Lorentz force is used to drive the mover of the image sensor to shift in the third axial direction.

A first center line of the first coil passes through a center point of the mover of the image sensor, and the first center line passes through a center of the first coil and is parallel to the first axial direction.

A second center line of the second coil does not pass through the center point of the mover of the image sensor, and the second center line passes through a center of the second coil and is parallel to the first axial direction.

A third center line of the third coil passes through the center point of the mover of the image sensor, and the third center line passes through a center of the third coil and is parallel to the third axial direction.

In this implementation, three-axis optical image stabilization is implemented by using a three-coil electromagnetic drive solution. Further, positions of the first coil, the second coil, and the third coil are disposed, to implement "multi-center integration" of the mover of the image sensor. In this way, crosstalk is reduced, and drive control precision is improved. However, if crosstalk compensation needs to be performed, crosstalk compensation performed in a drive control process is reduced, and real-time performance of drive control is improved.

For example, the first axial direction is an X axis, the second axial direction is a Y axis, and the third axial direction is an R axis.

In some possible implementations of the first aspect, the first coil includes a fourth coil and a fifth coil, the second coil includes a sixth coil and a seventh coil, the fourth coil and the sixth coil are disposed opposite to each other, and the fifth coil and the seventh coil are disposed opposite to each other. The driver chip is specifically configured to:
apply a fourth current signal to the fourth coil and the sixth coil based on the displacement amount in the first axial direction and the displacement amount in the second axial direction, so that the fourth coil generates, under the action of the magnetic field, a fourth Lorentz force acting on the mover of the image sensor, and the sixth coil generates, under the action of the magnetic field, a fifth Lorentz force acting on the mover of the image sensor;
apply a fifth current signal to the fifth coil and the seventh coil based on the displacement amount in the first axial direction and the displacement amount in the second axial direction, so that the fifth coil generates, under the action of the magnetic field, a sixth Lorentz force acting on the mover of the image sensor, and the seventh coil generates, under the action of the magnetic field, a seventh Lorentz force acting on the mover of the image sensor; and
apply a sixth current signal to the third coil based on the displacement amount in the third axial direction, so that the third coil generates, under the action of the magnetic field, a Lorentz force acting on the mover of the image sensor, to drive the mover of the image sensor to shift in the third axial direction.

The mover of the image sensor shifts in the first axial direction and/or the second axial direction under actions of the fourth Lorentz force, the fifth Lorentz force, the sixth Lorentz force, and the seventh Lorentz force.

In this implementation, three-axis optical image stabilization is implemented by using a five-coil electromagnetic drive solution. Compared with the three-coil electromagnetic drive solution, the five-coil electromagnetic drive solution has more coils, provides a larger driving force, and has better driving stability.

In some possible implementations of the first aspect, none of a fourth center line of the fourth coil, a fifth center line of the fifth coil, a sixth center line of the sixth coil, and a seventh center line of the seventh coil passes through a center point of the mover of the image sensor.

The fourth center line passes through a center of the fourth coil and is parallel to the first axial direction, the fifth center line passes through a center of the fifth coil and is parallel to the first axial direction, the sixth center line passes through the sixth coil and is parallel to the first axial direction, and the seventh center line passes through a center of the seventh coil and is parallel to the first axial direction.

A third center line of the third coil can pass through the center point of the mover of the image sensor, and the third center line passes through a center of the third coil and is parallel to the third axial direction.

In this implementation, positions of each coil may be disposed, to implement "multi-center integration" of the mover of the image sensor, and this reduces crosstalk and improves drive control precision. If crosstalk compensation needs to be performed, crosstalk compensation performed in a drive control process may be reduced, and real-time performance of drive control is improved.

In some possible implementations of the first aspect, coils of the fourth coil, the fifth coil, the sixth coil, and the seventh coil are all the same; or a coil size of the fourth coil is the same as a coil size of the sixth coil, a coil size of the fifth coil is the same as a coil size of the seventh coil, and the coil size of the fourth coil is different from the coil size of the fifth coil.

In some possible implementations of the first aspect, the third coil includes an eighth coil and a ninth coil, and the driver chip is specifically configured to:
apply the sixth current signal to the eighth coil and the ninth coil based on the displacement amount in the third axial direction, so that the eighth coil generates, under the action of the magnetic field, an eighth Lorentz force acting on the mover of the image sensor, and the ninth coil generates, under the action of the magnetic field, a ninth Lorentz force acting on the mover of the image sensor.

The mover of the image sensor shifts in the third axial direction under a joint action of the eighth Lorentz force and the ninth Lorentz force.

In some possible implementations of the first aspect, a distance between the center point of the mover of the image sensor and a center of the eighth coil is equal to a distance between the center point of the mover of the image sensor and a center of the ninth coil.

In some possible implementations of the first aspect, a gravity center of the mover of the image sensor coincides with a geometric center of the mover of the image sensor.

For example, the gravity center, a geometric center, and a force center of the mover of the image sensor coincide with each other, and the force center is a center of a Lorentz force in the first axial direction and a Lorentz force in the third axial direction.

In some possible implementations of the first aspect, the system includes a position detection module, configured to detect a position of the image sensor.

In some possible implementations of the first aspect, the position detection module includes a first position sensor, a second position sensor, and a third position sensor.

The first position sensor is configured to cooperate with a first magnet, to obtain a position signal of the image sensor in the first axial direction.

The second position sensor is configured to cooperate with a second magnet, to obtain a position signal of the image sensor in the second axial direction.

The third position sensor is configured to cooperate with a third magnet, to obtain a position signal of the image sensor in the third axial direction.

The first position sensor is disposed in a middle area of the first coil, the second position sensor is disposed in a middle area of the second coil, and the third position sensor is disposed in a middle area of the third coil.

When the first coil includes the fourth coil and the fifth coil, and the second coil includes the sixth coil and the seventh coil, the first magnet is disposed in a middle area of the fifth coil, the second magnet is disposed in a middle area of the seventh coil, and the third magnet is disposed in the middle area of the third coil.

When the first coil includes the fourth coil and the fifth coil, the second coil includes the sixth coil and the seventh coil, and the third coil includes the eighth coil and the ninth coil, the first magnet is disposed in a middle area of the fifth coil, the second magnet is disposed in a middle area of the seventh coil, and the third magnet is disposed in a middle area of the eighth coil.

The magnet includes the first magnet, the second magnet, and the third magnet.

According to the position detection system provided in this implementation, three-axis negative feedback of the image sensor can be implemented, thereby implementing a closed-loop negative feedback control process in three-axis optical image stabilization, and improving drive control precision.

In some possible implementations of the first aspect, the controller is specifically configured to: obtain a target position of the image sensor based on the first shake data, the second shake data, and the third shake data; and obtain the displacement amount of the image sensor in the first axial direction, the displacement amount of the image sensor in the second axial direction, and the displacement amount of the image sensor in the third axial direction based on the target position and a start position of the image sensor, where the start position of the image sensor is detected through the position detection module.

In some possible implementations of the first aspect, the controller is specifically configured to: obtain a position signal of the image sensor fed back by the position detection module, where the position signal of the image sensor is used to describe a current position of the image sensor; determine, based on the position signal of the image sensor, whether an error between the current position and the target position of the image sensor is within a preset range; when the error between the current position and the target position of the image sensor is not within the preset range, obtain the displacement amount of the image sensor in the first axial direction, the displacement amount of the image sensor in the second axial direction, and the displacement amount of the image sensor in the third axial direction based on the current position and the target position of the image sensor.

The driver is specifically configured to: read crosstalk calibration data prestored in the optical image stabilization motor; search the crosstalk calibration data for a crosstalk compensation amount in the first axial direction, a crosstalk compensation amount in the second axial direction, and a crosstalk compensation amount in the third axial direction; perform crosstalk compensation on the displacement amount in the first axial direction by using the crosstalk compensation amount in the first axial direction, to obtain a displacement amount in the first axial direction after crosstalk compensation, perform crosstalk compensation on the displacement amount in the second axial direction by using the crosstalk compensation amount in the second axial direction, to obtain a displacement amount in the second axial direction after crosstalk compensation, and perform crosstalk compensation on the displacement amount in the third axial direction by using the crosstalk compensation amount in the third axial direction, to obtain a displacement amount in the third axial direction after crosstalk compensation; drive, by using the optical image stabilization motor based on the displacement amount obtained after crosstalk compensation in the first axial direction, the image sensor to move in the first axial direction; drive, by using the optical image stabilization motor based on the displacement amount obtained after crosstalk compensation in the second axial direction, the image sensor to move in the second axial direction; and drive, by using the optical image stabilization motor based on the displacement amount obtained after crosstalk compensation in the third axial direction, the image sensor to move in the second axial direction.

The crosstalk compensation amount in the first axial direction includes a crosstalk compensation amount of displacement of the image sensor in the second axial direction to displacement of the image sensor in the first axial direction, and a crosstalk compensation amount of displacement of the image sensor in the third axial direction to the displacement of the image sensor in the first axial direction. The crosstalk compensation amount in the second axial direction includes a crosstalk compensation amount of the displacement of the image sensor in the first axial direction to the displacement of the image sensor in the second axial direction, and a crosstalk compensation amount of the displacement of the image sensor in the third axial direction to the displacement of the image sensor in the second axial direction. The crosstalk compensation amount in the third axial direction includes a crosstalk compensation amount of the displacement of the image sensor in the first axial direction to the displacement of the image sensor in the third axial direction, and a crosstalk compensation amount of the displacement of the image sensor in the second axial direction to the displacement of the image sensor in the third axial direction.

In this implementation, in a closed-loop negative feedback process, the driver chip performs crosstalk compensation on displacement of the image sensor in each axial direction by using a pre-calibrated crosstalk compensation amount. This reduces crosstalk impact, improves precision of anti-shake drive control, and ensures high optical image stability without image rotation or with small image rotation.

In some possible implementations of the first aspect, the sensor includes a gyroscope and an accelerometer.

According to a second aspect, an embodiment of this application provides a three-axis optical image stabilization method based on image sensor displacement, applied to a driver chip. The method includes: obtaining a displacement amount of an image sensor in a first axial direction, a displacement amount of the image sensor in a second axial direction, and a displacement amount of the image sensor in a third axial direction; driving, by using an optical image stabilization motor based on the displacement amount in the first axial direction, the displacement amount in the second axial direction, and the displacement amount in the third axial direction, the image sensor to shift in each axial direction.

The optical image stabilization motor includes a mover of the image sensor, a magnet, a first coil, a second coil, and a third coil, the first coil is disposed on a first side of the mover of the image sensor, the second coil is disposed on a second side of the mover of the image sensor, the third coil is disposed on a third side of the mover of the image sensor, the first side and the second side are opposite sides, and the third side and the first side are adjacent sides; the mover of the image sensor is connected to the image sensor, the image sensor moves with motion of the mover of the image sensor; and the magnet is configured to generate a magnetic field. After the first coil, the second coil, and the third coil are energized, an acting force acting on the mover of the image sensor is generated under an action of the magnetic field, to push the mover of the image sensor to shift in each axial direction.

In some possible implementations of the second aspect, the driving, by using an optical image stabilization motor based on the displacement amount in the first axial direction, the displacement amount in the second axial direction, and the displacement amount in the third axial direction, the image sensor to shift in each axial direction includes:
applying a first current signal to the first coil based on the displacement amount in the first axial direction, so that the first coil generates, under the action of the magnetic field, a first Lorentz force acting on the mover of the image sensor, where the first Lorentz force is used to drive the mover of the image sensor to shift in the first axial direction;
applying a second current signal to the second coil based on the displacement amount in the second axial direction, so that the second coil generates, under the action of the magnetic field, a second Lorentz force acting on the mover of the image sensor, where the second Lorentz force is used to generate a rotating torque to drive the mover of the image sensor to rotate in the second axial direction; and
applying a third current signal to the third coil based on the displacement amount in the third axial direction, so that the third coil generates, under the action of the magnetic field, a third Lorentz force acting on the mover of the image sensor, where the third Lorentz force is used to drive the mover of the image sensor to shift in the third axial direction.

A first center line of the first coil passes through a center point of the mover of the image sensor, and the first center line passes through a center of the first coil and is parallel to the first axial direction.

A second center line of the second coil does not pass through the center point of the mover of the image sensor, and the second center line passes through a center of the second coil and is parallel to the first axial direction.

A third center line of the third coil passes through the center point of the mover of the image sensor, and the third center line passes through a center of the third coil and is parallel to the third axial direction.

In some possible implementations of the second aspect, the first coil includes a fourth coil and a fifth coil, the second coil includes a sixth coil and a seventh coil, the fourth coil and the sixth coil are disposed opposite to each other, and the fifth coil and the seventh coil are disposed opposite to each other.

The driving, by using an optical image stabilization motor based on the displacement amount in the first axial direction, the displacement amount in the second axial direction, and the displacement amount in the third axial direction, the image sensor to shift in each axial direction includes:
applying a fourth current signal to the fourth coil and the sixth coil based on the displacement amount in the first axial direction and the displacement amount in the second axial direction, so that the fourth coil generates, under the action of the magnetic field, a fourth Lorentz force acting on the mover of the image sensor, and the sixth coil generates, under the action of the magnetic field, a fifth Lorentz force acting on the mover of the image sensor;
applying a fifth current signal to the fifth coil and the seventh coil based on the displacement amount in the first axial direction and the displacement amount in the second axial direction, so that the fifth coil generates, under the action of the magnetic field, a sixth Lorentz force acting on the mover of the image sensor, and the seventh coil generates, under the action of the magnetic field, a seventh Lorentz force acting on the mover of the image sensor; and
applying a sixth current signal to the third coil based on the displacement amount in the third axial direction, so that the third coil generates, under the action of the magnetic field, a Lorentz force acting on the mover of the image sensor, to drive the mover of the image sensor to shift in the third axial direction.

The mover of the image sensor shifts in the first axial direction and/or the second axial direction under actions of the fourth Lorentz force, the fifth Lorentz force, the sixth Lorentz force, and the seventh Lorentz force.

In some possible implementations of the second aspect, none of a fourth center line of the fourth coil, a fifth center line of the fifth coil, a sixth center line of the sixth coil, and a seventh center line of the seventh coil passes through a center point of the mover of the image sensor, and a third center line of the third coil passes through the center point of the mover of the image sensor; and the third center line passes through a center of the third coil and is parallel to the third axial direction.

The fourth center line passes through a center of the fourth coil and is parallel to the first axial direction, the fifth center line passes through a center of the fifth coil and is parallel to the first axial direction, the sixth center line passes through the sixth coil and is parallel to the first axial direction, and the seventh center line passes through a center of the seventh coil and is parallel to the first axial direction.

In some possible implementations of the second aspect, coils of the fourth coil, the fifth coil, the sixth coil, and the seventh coil are all the same; or
a coil size of the fourth coil is the same as a coil size of the sixth coil, a coil size of the fifth coil is the same as a coil size of the seventh coil, and the coil size of the fourth coil is different from the coil size of the fifth coil.

In some possible implementations of the second aspect, the third coil includes an eighth coil and a ninth coil.

The applying a sixth current signal to the third coil based on the displacement amount in the third axial direction, so that the third coil generates, under the action of the magnetic field, a Lorentz force acting on the mover of the image sensor includes:
applying the sixth current signal to the eighth coil and the ninth coil based on the displacement amount in the third axial direction, so that the eighth coil generates, under the action of the magnetic field, an eighth Lorentz force acting on the mover of the image sensor, and the ninth coil generates, under the action of the magnetic field, a ninth Lorentz force acting on the mover of the image sensor.

The mover of the image sensor shifts in the third axial direction under a joint action of the eighth Lorentz force and the ninth Lorentz force.

In some possible implementations of the second aspect, a distance between the center point of the mover of the image sensor and a center of the eighth coil is equal to a distance between the center point of the mover of the image sensor and a center of the ninth coil.

In some possible implementations of the second aspect, a gravity center of the mover of the image sensor coincides with a geometric center of the mover of the image sensor.

In some possible implementations of the second aspect, before the driving, by using an optical image stabilization motor based on the displacement amount in the first axial direction, the displacement amount in the second axial direction, and the displacement amount in the third axial direction, the image sensor to shift in each axial direction, the method further includes:
reading crosstalk calibration data prestored in the optical image stabilization motor;
searching the crosstalk calibration data for a crosstalk compensation amount in the first axial direction, a crosstalk compensation amount in the second axial direction, and a crosstalk compensation amount in the third axial direction; and
performing crosstalk compensation on the displacement amount in the first axial direction by using the crosstalk compensation amount in the first axial direction, to obtain a displacement amount in the first axial direction after crosstalk compensation, performing crosstalk compensation on the displacement amount in the second axial direction by using the crosstalk compensation amount in the second axial direction, to obtain a displacement amount in the second axial direction after crosstalk compensation, and performing crosstalk compensation on the displacement amount in the third axial direction by using the crosstalk compensation amount in the third axial direction, to obtain a displacement amount in the third axial direction after crosstalk compensation.

The crosstalk compensation amount in the first axial direction includes a crosstalk compensation amount of displacement of the image sensor in the second axial direction to displacement of the image sensor in the first axial direction, and a crosstalk compensation amount of displacement of the image sensor in the third axial direction to the displacement of the image sensor in the first axial direction.

The crosstalk compensation amount in the second axial direction includes a crosstalk compensation amount of the displacement of the image sensor in the first axial direction to the displacement of the image sensor in the second axial direction, and a crosstalk compensation amount of the displacement of the image sensor in the third axial direction to the displacement of the image sensor in the second axial direction.

The crosstalk compensation amount in the third axial direction includes a crosstalk compensation amount of the displacement of the image sensor in the first axial direction to the displacement of the image sensor in the third axial direction, and a crosstalk compensation amount of the displacement of the image sensor in the second axial direction to the displacement of the image sensor in the third axial direction.

According to a third aspect, an embodiment of this application provides a camera module, including the three-axis optical image stabilization system based on image sensor displacement according to any one of the first aspect.

According to a fourth aspect, an embodiment of this application provides an electronic device, including a memory, a processor, and a computer program that is stored in the memory and that can be run on the processor. When executing the computer program, the processor implements the system according to any one of the first aspect.

According to a fifth aspect, an embodiment of this application provides a computer-readable storage medium. The computer-readable storage medium stores a computer program. When the computer program is executed by a processor, the method according to any one of the second aspect is implemented.

According to a sixth aspect, an embodiment of this application provides a chip system. The chip system includes a processor, the processor is coupled to a memory, and the processor executes a computer program stored in the memory, to implement the method according to any one of the second aspect. The chip system may be a single chip or a chip module including a plurality of chips.

According to a seventh aspect, an embodiment of this application provides a computer program product. When the computer program product runs on an electronic device, the electronic device is enabled to perform the method according to any one of the second aspect.

It may be understood that, for beneficial effects of the second aspect to the seventh aspect, refer to related descriptions in the first aspect. Details are not described herein again.

### BRIEF DESCRIPTION OF DRAWINGS

FIG. 1 is a schematic diagram of dual-axis optical image stabilization according to an embodiment of this application;
FIG. 2 is a schematic diagram of an application scenario according to an embodiment of this application;
FIG. 3 is a schematic diagram of a camera module 210 according to an embodiment of this application;
FIG. 4 is a schematic diagram of a video shooting scenario according to an embodiment of this application;
FIG. 5 is a schematic block diagram of an optical image stabilization system based on image sensor displacement according to an embodiment of this application;
FIG. 6 is a schematic diagram of a three-axis optical image stabilization system based on image sensor displacement according to an embodiment of this application;
FIG. 7 is a schematic block diagram of three-axis optical image stabilization drive control based on image sensor displacement according to an embodiment of this application;
FIG. 8 is a schematic diagram of a three-axis optical image stabilization drive process according to an embodiment of this application;
FIG. 9 is a schematic diagram of a three-coil electromagnetic drive solution according to an embodiment of this application;
FIG. 10 is a schematic diagram of a five-coil electromagnetic drive solution according to an embodiment of this application;
FIG. 11 is another schematic diagram of a five-coil electromagnetic drive solution according to an embodiment of this application;
FIG. 12 is a schematic diagram of a six-coil electromagnetic drive solution according to an embodiment of this application; and
FIG. 13 is a schematic block flowchart of an optical image stabilization method based on image sensor displacement according to an embodiment of this application.

### DESCRIPTION OF EMBODIMENTS

Currently, in an image sensor-shift optical image stabilization manner, due to a limitation of an electromagnetic drive solution, after being energized, an electromagnetic coil can generate current thrusts in only two axial directions, can push an image sensor to move in only the two axial directions, and can implement dual-axis optical image stabilization in only a pitch (pitch) direction and a yaw (yaw) direction.

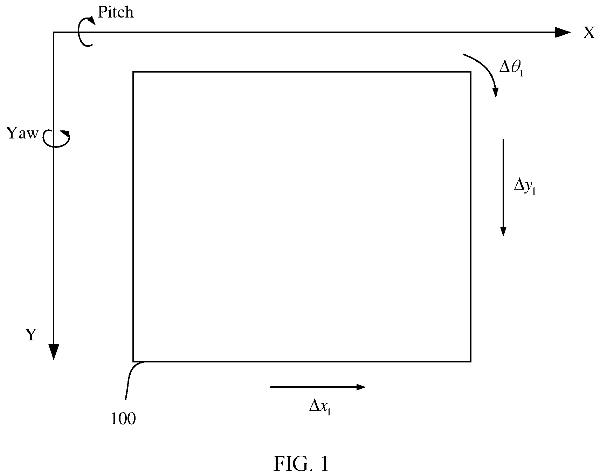

For example, FIG. 1 is a schematic diagram of dual-axis optical image stabilization according to an embodiment of this application. On an XY plane, an image sensor 100 may shift along an X-axis direction and/or shift along a Y-axis direction, to perform shake displacement compensation in a pitch (pitch) direction and/or a yaw (yaw) direction.

In other words, in a conventional electromagnetic drive solution, the image sensor can be pushed to shift in only the X-axis direction and/or shift in the Y-axis direction, but cannot be pushed to roll on the XY plane. Consequently, shake compensation cannot be performed in a roll (roll) direction.

Further, in the conventional image sensor-shift dual-axis optical image stabilization, due to a mechanical structural design defect and/or an assembly process, a crosstalk (crosstalk) problem usually exists. Consequently, problems such as image rotation and image instability occur.

The crosstalk in embodiments of this application means that when the image sensor is driven to shift along any direction, the image sensor generates additional displacement in another direction.

For example, in the scenario in FIG. 1, in some cases, it is assumed that start position coordinates of the image sensor 100 are (0, 0). Based on shake data, it is determined that a target position that the image sensor 100 should reach is (Δ*x*₁, 0). To be specific, under the current shake data, to suppress shake, displacement that the image sensor 100 should move in the X-axis direction is Δ*x*₁, and displacement that the image sensor 100 should move in the Y-axis direction is 0. After the target position that the image sensor 100 should reach is determined, a driver chip may drive, by using an image sensor actuating structure (not shown in FIG. 1), the image sensor 100 to shift by Δ*x*₁ in the X-axis direction. The image sensor actuating structure is configured to drive the image sensor to move along the X-axis direction and/or the Y-axis direction.

It is assumed that a geometric center and a gravity center of the image sensor actuating structure do not coincide with a force center due to a mechanical structural design defect or assembly process. The force center refers to a force center of an acting force along the X-axis direction and an acting force in the Y-axis direction.

To drive the image sensor 100 to shift along the X-axis direction, an acting force along the X-axis direction needs to be applied to the image sensor actuating structure or a component in the image sensor actuating structure. In this case, because the geometric center and the gravity center of the image sensor actuating structure do not coincide with an acting point of the acting force, after the acting force along the X-axis direction is applied, a rotating torque is generated. The rotating torque causes the image sensor 100 to rotate at an additional angle on the XY plane. In addition, an acting force in the Y-axis direction is further generated, so that the image sensor 100 generates an additional shift amount in the Y-axis direction.

In other words, due to a crosstalk problem, when the image sensor 100 shifts by Δ*x*₁ along the X-axis direction, the image sensor 100 generates a corresponding shift amount *y*₁ in the Y-axis direction, and also generates a rotation angle on the XY plane. Therefore, a position that the image sensor 100 may actually reach is (Δ*x*₁, *y*₁).

Similarly, when the target position that the image sensor 100 should reach is (0, Δ*y*₁), the driver chip drives the image sensor 100 to shift by Δ*y*₁ in the Y-axis direction. In this case, due to a crosstalk problem, when the image sensor 100 shifts by Δ*y*₁ in the Y-axis direction, the image sensor 100 generates an additional shift amount *x*₁ in the X-axis direction, and also generates a rotation angle on the XY plane. Therefore, a position that the image sensor 100 may actually reach is (*x*₁, Δ*y*₁).

When the target position that the image sensor 100 should reach is (Δ*x*₁, Δ*y*₁), the driver chip drives the image sensor 100 to simultaneously shift by Δ*x*₁ along the X-axis direction and shift by Δ*y*₁ in the Y-axis direction. Due to a crosstalk problem, an additional shift amount *x*₂ is generated by the image sensor 100 in the X-axis direction, an additional shift amount *y*₂ is generated in the Y-axis direction, and a rotation angle Δ*θ*₁ is also generated on the XY plane. Therefore, a position that the image sensor 100 may actually reach is (Δ*x*₁ + *x*₂, Δ*y*₁ + *y*₂).

It can be learned from the foregoing that, due to the crosstalk problem, the position that the image sensor 100 actually arrives is inconsistent with the target position that the image sensor 100 should arrive. That is, the crosstalk problem causes low precision of anti-shake drive control. In addition, when the image sensor is driven to shift in the X-axis direction and/or the Y-axis direction, the image sensor generates an additional rotation angle on the XY plane, and further causes problems such as image rotation and optical image instability. In other words, crosstalk may cause problems such as low precision of the anti-shake drive control, image rotation, and optical image instability. It should be noted that the coordinate system, the value, and the like in the foregoing example are examples.

For the related problem mentioned above, embodiments of this application provide a three-axis optical image stabilization solution based on image sensor displacement, to implement three-axis optical image stabilization in the pitch (pitch) direction, the yaw (yaw) direction, and the roll (roll) direction.

Further, crosstalk compensation is performed on a movement amount of the image sensor in each axis by using the crosstalk compensation amount, to reduce impact of the crosstalk, precision of anti-shake drive control is high, optical image stability is high, and there is no image rotation or image rotation is small.

Further, "multi-center integration" of an optical image stabilization motor is implemented by using a mechanical design, to reduce crosstalk compensation performed by a control algorithm.

In the following description, for illustration instead of limitation, specific details such as a particular system structure and a technology are provided to facilitate a thorough understanding of embodiments of this application.

The following describes an example of an application scenario that may be used in embodiments of this application.

In this embodiment of this application, the optical image stabilization solution based on image sensor displacement may be applied to a camera module of an electronic device, to implement shake suppression in a corresponding direction when shooting is performed by using the camera module.

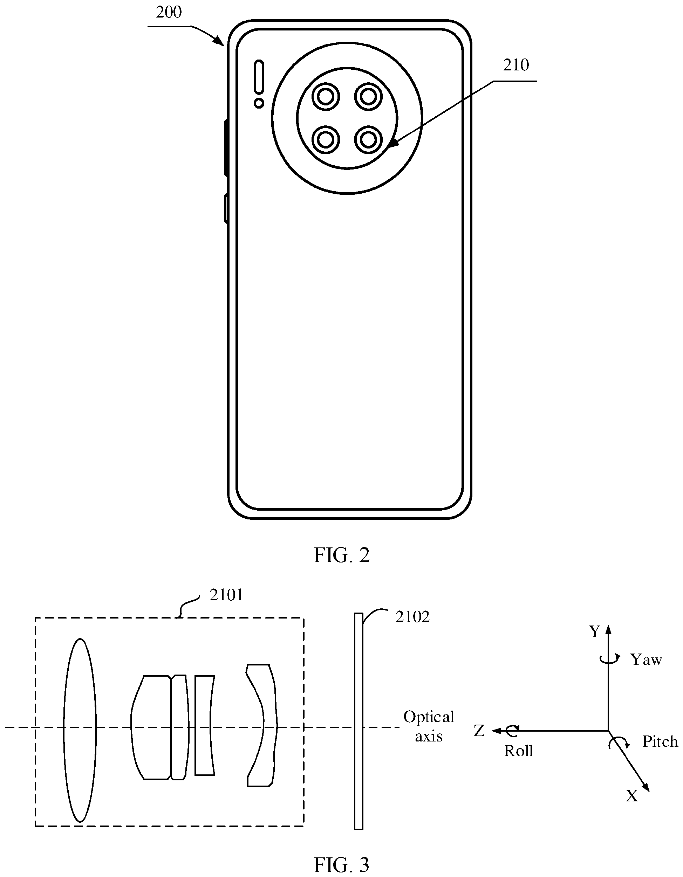

For example, FIG. 2 is a schematic diagram of an application scenario according to an embodiment of this application. As shown in FIG. 2, an electronic device 200 includes a camera module 210. The camera module 210 may be a telephoto camera module or a periscope telephoto camera module, may be a wide-angle camera module, or may be a camera module of another type. This is not limited herein.

The camera module 210 includes components such as a lens and an image sensor. For example, refer to a schematic diagram of the camera module 210 shown in FIG. 3. The camera module 210 may include a lens group 2101 and an image sensor 2102. The lens group 2101 includes a plurality of lenses, configured to transfer an imaging light beam to the image sensor 2102, and the image sensor 2102 is configured to convert the imaging light beam into an electrical signal, to obtain image data.

FIG. 3 further shows a coordinate system in the camera module. AZ axis is parallel to an optical axis of the lens group 2101, and a Y axis and an X axis are separately perpendicular to the Z axis. Rotation around the Y axis is called yaw (yaw), rotation around the X axis is called pitch (pitch), and rotation around the Z axis is called roll (roll).

In some embodiments, the optical image stabilization solution provided in this embodiment of this application can implement shake suppression in three directions: a yaw (yaw) direction, a pith (pitch) direction, and a roll (roll) direction.

It may be understood that, in addition to the lens group and the image sensor, the camera module 210 may further include another component used for optical image stabilization, for example, may further include an optical image stabilization motor, and a position sensor configured to detect a position of the image sensor.

In FIG. 2, the electronic device 200 is, for example, a mobile phone. In another embodiment, the electronic device 200 may alternatively be a laptop computer, a tablet computer, a dashboard camera, a camera, a monitoring device, or the like. This is not limited herein.

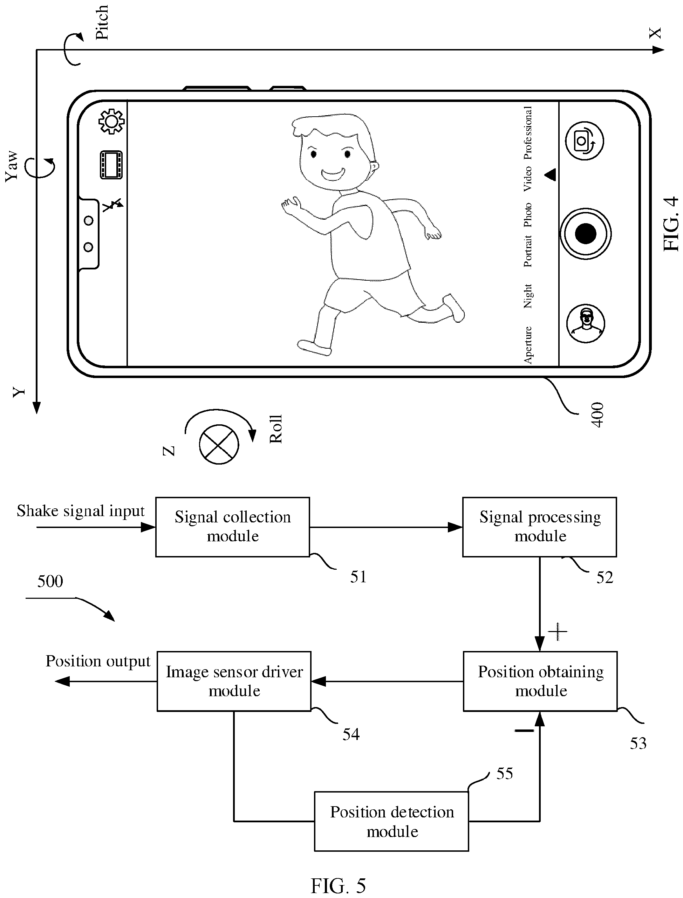

For example, the electronic device 200 is a mobile phone. Refer to a schematic diagram of a video shooting scenario shown in FIG. 4. In a process in which a user holds a mobile phone 400 to perform video shooting, a body of the mobile phone 400 shakes due to hand shaking. The mobile phone 400 collects angular velocity signals in three directions: a yaw (yaw) direction, a pitch (pitch) direction, and a roll (roll) direction by using an integrated gyroscope, accelerometer, and the like. Based on the angular velocity signals in the three directions, an optical image stabilization motor drives an image sensor to perform shake displacement compensation in the three directions: the yaw (yaw) direction, the pitch (pitch) direction, and the roll (roll) direction, to implement three-axis optical image stabilization.

For another example, when the electronic device 200 is the dashboard camera, the dashboard camera is disposed on a vehicle, and in a traveling process of the vehicle, the dashboard camera shakes due to vehicle shaking. The dashboard camera uses the integrated gyroscope, accelerometer, and the like to collect the shake data in the three directions. Based on the shake data in the three directions, the dashboard camera implements shake displacement compensation in the three directions.

In addition to the application scenario that may be involved in embodiments of this application, the following describes, with reference to the accompanying drawings, an optical image stabilization solution based on image sensor displacement provided in embodiments of this application.

The following first describes an optical image stabilization system, and in a process of describing the optical image stabilization system, a crosstalk compensation process is described as an example. After the optical image stabilization system is introduced, an electromagnetic drive solution of the optical image stabilization motor is introduced.

FIG. 5 is a schematic block diagram of an optical image stabilization system based on image sensor displacement according to an embodiment of this application. As shown in FIG. 5, an optical image stabilization system 500 may include a signal collection module 51, a signal processing module 52, a position obtaining module 53, an image sensor driver module 54, and a position detection module 55.

The signal collection module 51 is configured to collect original angular velocity signals in directions. The original angular velocity signals are analog signals.

The signal collection module 51 may collect an original angular velocity signal in a corresponding direction based on an actual anti-shake requirement. For example, when three-axis optical image stabilization needs to be implemented, the signal collection module 51 collects original angular velocity signals in three directions: a yaw (yaw) direction, a pitch (pitch) direction, and a roll (roll) direction, to implement shake suppression in the three directions: the yaw (yaw) direction, the pitch (pitch) direction, and the roll (roll) direction. For another example, when dual-axis optical image stabilization needs to be implemented, the signal collection module 51 collects original angular velocity signals in two directions: the yaw (yaw) direction and the pitch (pitch) direction, to implement shake suppression in the two directions: the yaw (yaw) direction and the pitch (pitch) direction.

Certainly, the signal collection module 51 may alternatively collect an original angular velocity signal in only one direction. This is not limited herein.

In some embodiments, the signal collection module 51 may include an inertia measurement unit. For example, the inertia measurement unit includes a gyroscope, an accelerometer, and the like.

The signal processing module 52 is configured to process an angular velocity analog signal collected by the signal collection module 51, to obtain a processed angular velocity signal. The processed angular velocity signal is a digital signal.

For example, a processing process of the angular velocity analog signal may include but is not limited to analog-to-digital conversion, filtering, integral, Fourier transform, and the like. To be specific, an analog-to-digital converter (analogue-to-digital converter, ADC) performs analog-to-digital conversion on the angular velocity analog signal collected by the signal collection module 51, to obtain an angular velocity digital signal; then a low-pass filter (Low-pass filter, LPF) is used to filter the angular velocity digital signal, to filter out a high-frequency signal, environmental noise, and the like in the angular velocity digital signal, and retain a low-frequency angular velocity digital signal; and finally, integral and Fourier transform are performed on the low-frequency angular velocity digital signal obtained through filtering, to obtain a frequency spectrum, an angle signal, and the like. The frequency spectrum may be obtained through Fourier transform, and the angle signal may be obtained through integral.

In some embodiments, processes such as analog-to-digital conversion, filtering, integral, and Fourier transform are performed on the angular velocity analog signal in each direction.

For example, the signal collection module 51 separately collects the original angular velocity signals in the three directions: the yaw (yaw) direction, the pitch (pitch) direction, and the roll (roll) direction. An original angular velocity signal in the pitch (pitch) direction passes through the analog-to-digital converter, the low-pass filter, an integral circuit, and a Fourier transform circuit in sequence, to obtain a frequency spectrum and an angle signal corresponding to the pitch (pitch) direction.

The position obtaining module 53 is configured to determine, based on an output of the signal processing module 52, a target position that the image sensor should reach.

In some embodiments, the position obtaining module 53 may process the output of the signal processing module 52 to obtain shake frequencies and shake amplitudes in each direction; and then obtain, based on the shake frequencies and the shake amplitudes in each direction, a target position that the image sensor should reach to suppress the shake.

For example, the output of the signal processing module 52 includes the frequency spectrum and the angle signal corresponding to the pitch (pitch) direction, a frequency spectrum and an angle signal corresponding to the yaw (yaw) direction, and a frequency spectrum and an angle signal corresponding to the roll (roll) direction. The position obtaining module 53 extracts a shake frequency and a shake amplitude in the pitch (pitch) direction from the frequency spectrum and the angle signal corresponding to the pitch (pitch) direction; extracts a shake frequency and a shake amplitude in the yaw (yaw) direction from the frequency spectrum and the angle signal corresponding to the yaw (yaw) direction; and extracts a shake frequency and a shake amplitude in the roll (roll) direction from the frequency spectrum and the angle signal corresponding to the roll (roll) direction.

The position obtaining module 53 is further configured to determine, based on the target position that the image sensor should reach and a start position of the image sensor, displacement that the image sensor should move in various directions. The displacement that should move is a shake displacement compensation amount.

The start position of the image sensor may be detected through the position detection module 55. The start position of the image sensor is a current position of the image sensor. Through the start position of the image sensor, an initial relative position relationship between a reference point and an optical path center on the image sensor can be quickly and accurately determined.

After determining the shake displacement compensation amount of the image sensor in each direction, the position obtaining module 53 transfers the shake displacement compensation amount to the image sensor driver module 54, and performs closed-loop negative feedback control based on the shake displacement compensation amount and the position of the image sensor fed back by the position detection module 55.

In some embodiments, the position obtaining module 53 may transfer the shake displacement compensation amount in each direction to the image sensor driver module 54 by using a control signal, where the control signal carries the shake displacement compensation amount in each direction.

The image sensor driver module 54 is configured to: after the displacement of the image sensor in each direction is obtained, drive, based on the displacement in each direction, the image sensor to move along each direction, to perform optical shake compensation.

In addition to detecting the relative position relationship between the reference point and the optical path center on the image sensor, the position detection module 55 may be further configured to detect a position of the image sensor after shake compensation, and feed back the position of the image sensor after shake compensation to the position obtaining module 53. Therefore, the position obtaining module 53 performs closed-loop negative feedback control based on the position of the image sensor fed back by the position detection module 55.

The position detection module 55 may include a position detection sensor, where the position detection sensor is configured to detect the position of the image sensor.

For example, the closed-loop negative feedback control process is as follows.

The position obtaining module 53 obtains the shake displacement compensation amount of the image sensor in each direction based on the shake frequencies and the shake amplitudes in each direction, and generates a first control signal based on the shake displacement compensation amount. The first control signal carries the displacement of the image sensor in each direction.

After receiving the control signal from the position obtaining module 53, the image sensor driver module 54 parses the control signal to obtain the displacement of the image sensor in each direction.

For each direction, the image sensor driver module 54 drives, based on displacement in the direction, the image sensor to shift along a corresponding direction. For example, for the pitch (pitch) direction, based on displacement corresponding to the pitch (pitch) direction, the image sensor driver module 54 shifts along an X-axis direction according to the image sensor. For the yaw (yaw) direction, based on displacement corresponding to the yaw (yaw) direction, the image sensor driver module 54 shifts along a Y-axis direction according to the image sensor. For the roll (roll) direction, based on displacement corresponding to the roll (roll) direction, the image sensor driver module 54 rotates along an R-axis direction according to the image sensor.

In this embodiment of this application, for each direction, the image sensor is driven, based on the displacement corresponding to the direction, to shift along a corresponding direction. Driving control in each direction is not coupled, that is, motion control of driving the image sensor along each direction is decoupled from each other. For example, motion control of the image sensor along the X-axis direction, motion control of the image sensor in the Y-axis direction, and motion control of the image sensor along the R-axis direction are decoupled.

The image sensor driver module 54 drives the image sensor to move in each direction based on the control signal, to perform optical shake compensation. After that, the position detection module 55 may detect positions of the image sensor in each direction, compare the re-detected position of the image sensor with the target position. When a deviation between the re-detected position of the image sensor and the target position is within an allowed range, a detected position signal of the image sensor is output to the position obtaining module 53.

In some embodiments, the position detection module 55 may implement decoupling negative feedback in each direction, that is, the position detection module 55 may separately detect positions of the image sensor in each direction.

The position obtaining module 53 obtains the position signal of the image sensor fed back by the position detection module 55, and determines, based on a re-detected position signal of the image sensor, whether an error between the current position and the target position of the image sensor is within a preset range. If the error between the current position and the target position of the image sensor is within the preset range, the current driving control process ends; and if the error between the current position and the target position of the image sensor is not within the preset range, the driving control continues.

The process of continuing to perform the driving control by the position obtaining module 53 based on the re-detected position signal of the image sensor may be as follows.

The position obtaining module 53 determines the displacement of the image sensor in each direction based on a difference between the current position and the target position of the image sensor, generates a control signal based on the displacement in each direction, and transfers the control signal to the image sensor driver module 54.

It should be noted that the image sensor driver module 54 may include an image sensor actuating structure, and the image sensor actuating structure may be configured to drive the image sensor to move in each direction.

For example, the image sensor actuating structure may include a movable platform, a basis, and an actuator. The basis is fixedly disposed, the movable platform is connected to the basis, and the movable platform can move relative to the basis. The movable platform is fixedly connected to the actuator.

The movable platform is used to carry the image sensor. The actuator is used to drive the movable platform to move relative to the basis. When the movable platform moves, the image sensor can move along with the moving of the movable platform.

In some embodiments, the actuator may be an electromagnetic actuator, and the movable platform is a mover of the image sensor. In another embodiment, the actuator may alternatively be another type of actuator.

In other words, in this embodiment of this application, after obtaining the displacement in each axis, the image sensor driver module 54 may drive, in an electromagnetic driving manner, the image sensor to move in each axis, or may drive, in another driving manner, the image sensor to move in each axis. A driving manner is not limited herein.

In some embodiments, after obtaining the displacement of the image sensor in each direction based on the control signal, the image sensor driver module 54 continues to drive, based on the displacement in each direction, the image sensor to move along each axial direction. This cycle is performed until the position obtaining module 53 determines, based on the position signal of the image sensor fed back by the position detection module 55, that the error between the current position and the target position of the image sensor is within the preset range. In this case, a crosstalk problem exists.

In some other embodiments, to reduce impact of the crosstalk problem, in a closed-loop negative feedback control process, a pre-calibrated crosstalk compensation amount may be used to compensate for the displacement amount of the image sensor in each direction.

For example, after obtaining the displacement amount of the image sensor in each direction based on the control signal, the image sensor driver module 54 obtains crosstalk compensation amount in each direction from crosstalk calibration data. For each direction, crosstalk compensation is performed on the displacement amount by using the crosstalk compensation amount, to obtain a displacement amount after the crosstalk compensation. Finally, the image sensor is driven to move along a corresponding direction based on the displacement amount in each direction after crosstalk compensation.

In specific application, the crosstalk calibration data is obtained in advance through a crosstalk calibration process; crosstalk compensation amounts in different directions and different positions may be found based on the crosstalk calibration data; and crosstalk compensation is performed on the displacement amount based on the crosstalk compensation amount. For example, it is assumed that the position obtaining module 53 determines, based on the re-detected position signal and the target position of the image sensor, that a displacement amount that the image sensor should move in the X-axis direction is Δ*x*₂, a displacement amount that the image sensor should move in the Y-axis direction is Δ*y*₂, and a displacement amount that the image sensor should move in the R-axis direction is Δ*θ*₂ .

Based on the displacement amount Δ*x*₂ in the X-axis direction and the target position, searching the following crosstalk calibration data for: a crosstalk compensation amount of X-axis shift Δ*x*₂ for Y-axis shift is *y*₃*,* and a crosstalk compensation amount of X-axis shift Δ*x*₂ for R-axis roll is *θ*₁.

Based on the displacement amount Δ*y*₂ in the Y-axis direction and the target position, searching the following crosstalk calibration data for: a crosstalk compensation amount of Y-axis shift Δ*y*₂ for X-axis shift is *x*₃, and a crosstalk compensation amount of Y-axis shift Δ*y*₂ for R-axis shift is *θ*₂.

Based on the displacement amount Δ*θ*₂ in the R-axis direction and the target position, searching the following crosstalk calibration data for: a crosstalk compensation amount of the R-axis roll Δ*θ*₂ for the X-axis shift is *x*₄, and a crosstalk compensation amount of the R-axis roll Δ*θ*₂ for the Y-axis shift is *y*₄.

In this case, for the X-axis direction, a displacement amount after crosstalk compensation is equal to Δ*x*₂ + *x*₃ + *x*₄.

For the Y-axis direction, a displacement amount after crosstalk compensation is equal to Δ*y*₂ + *y*₃ + *y*₄.

For the R-axis direction, a displacement amount after crosstalk compensation is equal to Δ*θ*₂ + *θ*₁ + *θ*₂.

Similarly, a displacement amount that the image sensor should move in the X-axis direction is Δ*x*₂, a displacement amount that the image sensor should move in the Y-axis direction is 0, and a displacement amount that the image sensor should move in the R-axis direction is 0.

Based on the displacement amount Δ*x*₂ in the X-axis direction and the target position, searching the following crosstalk calibration data for: a crosstalk compensation amount of X-axis shift Δ*x*₂ for Y-axis shift is *y*₃*,* and a crosstalk compensation amount of X-axis shift Δ*x*₂ for R-axis roll is *θ*₁.

In this case, for the X-axis direction, a displacement amount after crosstalk compensation is equal to Δ*x*₂.

For the Y-axis direction, a displacement amount after crosstalk compensation is equal to *y*₃.

For the R-axis direction, a displacement amount after crosstalk compensation is equal to *θ*₁ .

A displacement amount that the image sensor should move in the X-axis direction is Δ*x*₂, a displacement amount that the image sensor should move in the Y-axis direction is Δ*y*₂, and a displacement amount that the image sensor should move in the R-axis direction is 0.

Based on the displacement amount Δ*x*₂ in the X-axis direction and the target position, searching the following crosstalk calibration data for: a crosstalk compensation amount of X-axis shift Δ*x*₂ for Y-axis shift is *y*₃*,* and a crosstalk compensation amount of X-axis shift Δ*x*₂ for R-axis roll is *θ*₁.

Based on the displacement amount Δ*y*₂ in the Y-axis direction and the target position, searching the following crosstalk calibration data for: a crosstalk compensation amount of Y-axis shift Δ*y*₂ for X-axis shift is *x*₃, and a crosstalk compensation amount of Y-axis shift Δ*y*₂ for R-axis shift is *θ*₂.

In this case, for the X-axis direction, a displacement amount after crosstalk compensation is equal to Δ*x*₂ + *x*₃*.*

For the Y-axis direction, a displacement amount after crosstalk compensation is equal to Δ*y*₂ + *y*₃*.*

For the R-axis direction, a displacement amount after crosstalk compensation is equal to *θ*₁ + *θ*₂.

Crosstalk compensation in another case is similar to that described above, and is not enumerated herein.

For another example, refer to a dual-axis optical image stabilization scenario in a yaw (yaw) direction and a pitch (pitch) direction shown in FIG. 1. In a scenario, to suppress shake, the displacement amount that the image sensor should move in the X-axis direction is Δ*x*₃, and the displacement amount that the image sensor should move in the Y-axis direction is Δ*y*₃.

Based on the displacement amount Δ*x*₃ in the X-axis direction and the target position, searching the following crosstalk calibration data for: a crosstalk compensation amount of X-axis shift Δ*x*₃ for Y-axis shift is *y*₅.

Based on the displacement amount Δ*y*₃ in the Y-axis direction and the target position, searching the following crosstalk calibration data for: a crosstalk compensation amount of Y-axis shift Δ*y*₃ for X-axis shift is *x*₅.

In this case, for the X-axis direction, a displacement amount after crosstalk compensation is equal to Δ*x*₃ + Δ*x*₃. For the Y-axis direction, a displacement amount after crosstalk compensation is equal to Δ_{*y*3} + *y*₅.

The crosstalk compensation manner in this embodiment of this application may be applied to three-axis optical image stabilization, may be applied to dual-axis optical image stabilization, or may be applied to optical image stabilization of another quantity of axes. This is not limited herein.

After compensating for the displacement amount of the image sensor in each axis by using the crosstalk compensation amount, to obtain the displacement amount in each axis after crosstalk compensation, the image sensor driver module 54 drives, based on the displacement amount in each axis after crosstalk compensation, the image sensor to move a corresponding displacement amount along each direction, so that the image sensor reaches the target position, to implement shake displacement compensation.

For example, X-axis displacement amount after crosstalk compensation is Δ*x*₂, Y-axis displacement amount after crosstalk compensation is *y*₃*,* and R-axis displacement amount after crosstalk compensation is *θ*₁. In this case, the image sensor driver module 54 separately drives the image sensor to shift Δ*x*₂ along the X-axis direction, shift *y*₃ in the Y-axis direction, and rotate *θ*₁ along the R-axis direction.

After the image sensor driver module 54 drives the image sensor to move along a corresponding direction based on the displacement after crosstalk compensation in each direction, the position detection module 55 re-detects the position signals of the image sensor in each direction, and determines, based on the re-detected position signals, whether an error between the current position and the target position of the image sensor is within an allowed range. If the error between the current position and the target position of the image sensor is within the allowed range, the position signal of the image sensor is output to the position obtaining module 53. The position obtaining module 53 determines, based on the obtained position signal of the image sensor, whether the error between the current position and the target position of the image sensor is within a preset range. If the error between the current position and the target position of the image sensor is within the preset range, the current driving control ends; and if the error between the current position and the target position of the image sensor is not within the preset range, drive negative feedback control continues. To be specific, the position obtaining module 53 determines, based on the current position and the target position of the image sensor, displacement amount that the image sensor should move in each direction, and then transfers the displacement to the image sensor driver module 54. The image sensor driver module 54 continues to search for crosstalk calibration data to obtain a crosstalk compensation amount, compensates for the displacement amount by using the crosstalk compensation amount, to obtain displacement after crosstalk compensation, and finally drives the image sensor to move in each direction based on the displacement amount after crosstalk compensation. This cycle is performed until the error between the current position and the target position that are of the image sensor and that is fed back by the position detection module 55 is within the preset range.

It can be learned from the foregoing that, compared with that no crosstalk compensation is performed, in this embodiment of this application, in a drive negative feedback control process, crosstalk compensation is performed on displacement amount of the image sensor in each direction by using a crosstalk compensation amount, and then the image sensor is driven to move a corresponding displacement amount along each direction based on the displacement obtained after crosstalk compensation in each direction. This reduces crosstalk impact, improves precision of anti-shake drive control, and ensures high optical image stability without image rotation.

As shown above, the foregoing mentioned optical image stabilization system based on image sensor displacement not only can be applied to dual-axis optical image stabilization, but also can be applied to three-axis optical image stabilization. In addition, in the closed-loop negative feedback control process, crosstalk compensation may be performed, or crosstalk compensation may not be performed.

For example, when applied to the dual-axis optical image stabilization and crosstalk compensation is performed, original angular velocity signals in two directions: a yaw (yaw) direction and a pitch (pitch) direction are collected, and the original angular velocity signals in the two directions are separately processed to obtain shake frequencies and shake amplitudes in the two directions. The target position that the image sensor should reach is obtained based on the shake frequencies and the shake amplitudes in the two directions. Then, shake displacement compensation amounts of the image sensor in the X-axis direction and the Y-axis direction are obtained based on the target position and the start position that the image sensor should reach. Based on the shake displacement compensation amount of the image sensor in the X-axis direction, the image sensor is driven to move along the X-axis direction, and based on the shake displacement compensation amount of the image sensor in the Y-axis direction, the image sensor is driven to move in the Y-axis direction. In addition, the closed-loop negative feedback control of the position signal of the image sensor is implemented by using a position sensor. In the closed-loop negative feedback control process, if it is determined, based on the feedback position signal of the image sensor, that the error between the current position and the target position of the image sensor is not within the preset range, based on the current position and the target position of the image sensor, the displacement of the image sensor in the X-axis direction and the displacement in the Y-axis direction are determined again, and crosstalk calibration data search is performed to obtain the crosstalk compensation amount in the X-axis direction, the crosstalk compensation amount in the Y-axis direction, and the crosstalk compensation amount in the R-axis direction. Then, based on the crosstalk compensation amount and displacement in each axis, the image sensor is driven to move along each axial direction. For example, in the closed-loop negative feedback process, the image sensor may be driven to move in a reverse direction based on an additional rotation angle of the image sensor on an XY plane, to offset the additional rotation angle. In this case, crosstalk of dual-axis optical image stabilization is reduced through crosstalk compensation, and precision of optical image stabilization drive control is improved, and optical image stability is improved without image rotation.

When applied to three-axis optical image stabilization, original angular velocity signals in three directions: the yaw (yaw) direction, the pitch (pitch) direction, and the roll (roll) direction are collected, and shake suppression in the three directions is implemented based on the original angular velocity signals in the three directions. In this case, crosstalk compensation may be performed, or crosstalk compensation may not be performed.

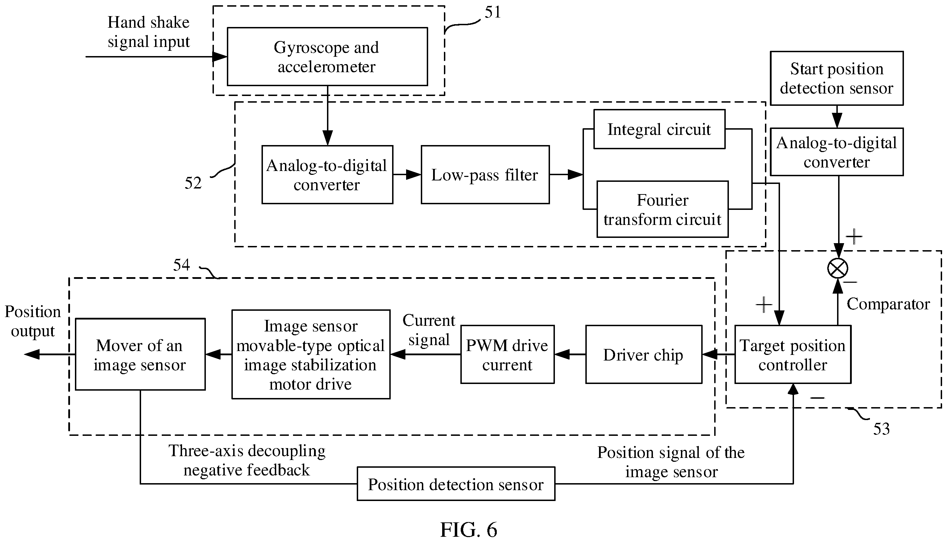

For example, the following describes the three-axis optical image stabilization system by using an example with reference to a schematic diagram of a three-axis optical image stabilization system that is based on image sensor displacement and that is shown in FIG. 6.

As shown in FIG. 6, a signal collection module 51 includes a gyroscope and an accelerometer. A signal processing module 52 may include an analog-to-digital converter, a low-pass filter, an integral circuit, and a Fourier transformation circuit. A position obtaining module 53 may include a target position controller and a comparator. An image sensor driver module 54 includes a driver chip, a PWM drive current, a mobile optical image stabilization motor for an image sensor, and a mover of the image sensor. A position detection module 55 includes a start position detection sensor and a position detection sensor. The start position detection sensor and the position detection sensor may include, for example, one or more of a Hall effect sensor, a tunneling magneto resistance (Tunneling Magneto Resistance, TMR) sensor, a giant magneto resistance (Giant Magneto Resistance, GMR) sensor, and the like.

For example, a working process of the system may be as follows.

In a process in which a user holds an electronic device to perform shooting, a body of the electronic device inevitably shakes due to hand shaking. In this case, a device shake caused by the hand shaking is detected by using the gyroscope and the accelerometer that are integrated into the electronic device, that is, a hand shake signal is collected by using the gyroscope and the accelerometer, to obtain original angular velocity signals in three directions: a yaw (yaw) direction, a pitch (pitch) direction, and a roll (roll) direction. The electronic device may include the three-axis optical image stabilization system shown in FIG. 6. Further, all or some of the three-axis optical image stabilization system shown in FIG. 6 are integrated into a camera module of the electronic device.

After collecting the original angular velocity signals in the three directions, the gyroscope and the accelerometer transfer the collected original angular velocity signals to the analog-to-digital converter, to convert an original angular velocity analog signal into an angular velocity digital signal; and then transfer the angular velocity digital signal to a low-pass filter, to filter out a high-frequency interference signal and noise, and retain a hand shake signal at a low frequency; and finally, the hand shake signal at the low frequency passes through a Fourier transformation circuit and an integral circuit, to obtain a frequency spectrum and an angle signal.

After obtaining the frequency spectrum and the angle signal, the target position controller extracts, based on the frequency spectrum and the angle signal, a shake amplitude and a shake frequency in the yaw (yaw) direction, a shake amplitude and a shake frequency in the pitch (pitch) direction, and a shake amplitude and a shake frequency in the roll (roll) direction. That is, the target position controller further decomposes and decouples the hand shake signal based on output of the signal processing module, to obtain a shake amplitude and a shake frequency in each direction. Then, the target position controller obtains, based on the shake amplitude and the shake frequency in each direction, a target position that the image sensor should reach in the shake scenario.

After obtaining the target position of the image sensor, the target position controller transfers the target position and the start position of the image sensor to the comparator, and obtains a shake compensation displacement amount of the image sensor in the pitch (pitch) direction, a shake compensation displacement amount in the yaw (yaw) direction, and a shake compensation displacement amount in the roll (roll) direction by using a feedback function of the comparator. The shake displacement compensation amount refers to a displacement amount that should be moved to compensate for shake.

The start position of the image sensor may be detected by the start position sensor. After detecting a start position signal of the image sensor, the start position sensor transfers the start position signal to the analog-to-digital converter, to convert the collected start position signal into a digital signal by using the analog-to-digital converter, and then transfer a start position signal in a form of the digital signal to the comparator.

After obtaining the shake displacement compensation amount in each direction by using the feedback function of the comparator, the target position controller generates a control signal based on the shake displacement compensation amount in each direction, and transmits the control signal to the driver chip. The control signal carries the shake displacement compensation amount of the image sensor in each direction.

After receiving the control signal from the target position controller, the driver chip may obtain, by parsing the control signal, the shake displacement compensation amount in the pitch (pitch) direction, the shake displacement compensation amount in the yaw (yaw) direction, and the shake displacement compensation amount in the roll (roll) direction of the image sensor.

After obtaining the shake displacement compensation amount in each direction, the driver chip controls, based on the shake displacement compensation amount in each direction and a displacement direction, a PWM drive structure to generate a PWM current signal of a corresponding magnitude and a corresponding direction, and applies the PWM current signal to a moving optical image stabilization motor of the image sensor, so that the optical image stabilization motor drives a mover of the image sensor to move along each direction, to drive the image sensor to move along each axis, and implement shake displacement compensation in each direction of the image sensor, and drive the image sensor to move along each axial direction.

It may be understood that the mover of the image sensor may be considered as a mover element of the optical image stabilization motor, and the mover may move under an action of a driving force. The mover of the image sensor is connected to the image sensor. When the mover of the image sensor moves, the image sensor also moves. Therefore, the mover of the image sensor may be driven to shift in each direction, so that the image sensor shifts in each direction, to compensate for shake.

Drive control of the image sensor in each direction is decoupled from each other. Specifically, the driver chip obtains a displacement and a displacement direction that are of the image sensor and that are along an X-axis direction based on the shake displacement compensation value in the pitch (pitch) direction, generates a current signal of a corresponding magnitude and a corresponding direction based on the displacement and the displacement direction that are along the X-axis direction, and applies the current signal to the optical image stabilization motor, so that the optical image stabilization motor drives the image sensor to shift a specific displacement along the X-axis direction.

Similarly, the driver chip obtains a displacement and a displacement direction of the image sensor along a Y-axis direction based on the shake displacement compensation value in the yaw (yaw) direction, generates a current signal of a corresponding magnitude and a corresponding direction based on the displacement and the displacement direction in the Y-axis direction, and applies the current signal to the optical image stabilization motor, so that the optical image stabilization motor drives the image sensor to shift a specific displacement in the Y-axis direction.

The driver chip obtains a rotation angle and a rotation direction of the image sensor along an R-axis direction based on the shake displacement compensation amount in the roll (roll) direction, generates a current signal of a corresponding magnitude and a corresponding direction based on the rotation angle and the rotation direction along the R-axis direction, and applies the current signal to the optical image stabilization motor, so that the optical image stabilization motor drives the image sensor to rotate by a specific angle along the R-axis direction.

As shown in FIG. 6, the driver chip drives, by using the current signal, the mover of the image sensor to move in various directions, to perform optical shake compensation. After that, the position detection sensor may re-detect the position signal of the image sensor, and feed back the position signal of the image sensor to the target position controller. The position signal of the image sensor is used to describe a position of the image sensor.

The position detection sensor can implement three-axis decoupling negative feedback. Specifically, the position detection sensor may separately detect a position of the image sensor on the X axis, a position of the image sensor on the Y axis, and a position of the image sensor on the R axis, and feed back the positions of the image sensor in each axis to the target position controller.

After receiving the position signal of the image sensor that is fed back, the target position controller obtains an error between a current position and a target position of the image sensor by comparing the current position and the target position, and then determines whether the error is within a preset range. If the error is within the preset range, the target position controller ends the current drive control process; and if the error is not within the preset range, the target position controller obtains the current position of the image sensor based on the position signal of the image sensor fed back by the position detection sensor, transfers the current position and the target position of the image sensor to a comparator, and obtains, by using a feedback function of the comparator, displacement that the image sensor should move in each direction. In this case, the displacement that should shift in each direction includes the displacement in the X-axis direction, the displacement in the Y-axis direction, and the displacement in the R-axis direction. The control signal is generated based on the displacement that the image sensor should move in each direction, and finally the control signal is transferred to the driver chip.

In some embodiments, the driver chip may not perform crosstalk compensation in a closed-loop negative feedback control process. In this case, after receiving the control signal from the target position controller, the driver chip obtains the displacements of the image sensor in all directions by parsing the control signal; generates PWM current signals of corresponding magnitudes and corresponding directions based on the displacements and displacement directions of the image sensor in all directions; and applies the generated PWM current signals to coils in the optical image stabilization motor, to drive, by using the optical image stabilization motor, the mover of the image sensor to move along all axes. This cycle is performed until the driver chip determines, based on the position signal of the image sensor detected by the position detection sensor, that the error between the current position and the target position of the image sensor is within the preset range.

In some other embodiments, to reduce impact of a crosstalk problem, crosstalk calibration data may be used to perform crosstalk compensation. In this case, after receiving the control signal from the target position controller, the driver chip obtains the displacements of the image sensor in each direction by parsing the control signal; then searches for calibration data in each direction to obtain a crosstalk compensation value in each direction; and for each direction, performs crosstalk compensation on the shake displacement compensation value by using the crosstalk compensation value, to obtain a displacement obtained after crosstalk compensation.

For example, for the X-axis direction, the driver chip searches for crosstalk calibration data based on the displacement in the Y-axis direction and the displacement in the R-axis direction, to obtain a crosstalk compensation amount in the X-axis direction, and then adds the crosstalk compensation amount in the X-axis direction and the displacement in the X-axis direction, to obtain a displacement amount obtained after crosstalk compensation in the X-axis direction.

Similarly, for the Y-axis direction, the driver chip searches for crosstalk calibration data based on the displacement amount in the X-axis direction and the displacement amount in the R-axis direction, to obtain a crosstalk compensation amount in the Y-axis direction, and then adds the crosstalk compensation amount in the Y-axis direction and the displacement amount in the Y-axis direction, to obtain a displacement amount obtained after crosstalk compensation in the Y-axis direction.

For the R-axis direction, the driver chip searches for crosstalk calibration data based on the displacement amount in the X-axis direction and the displacement amount in the Y-axis direction, to obtain a crosstalk compensation amount in the R-axis direction, and then adds the crosstalk compensation amount in the R-axis direction and the displacement amount in the R-axis direction, to obtain a displacement amount obtained after crosstalk compensation in the R-axis direction.

After obtaining the displacement obtained after crosstalk compensation, the driver chip outputs, by using the PWM drive structure and based on the displacement obtained after crosstalk compensation in each axis, a current signal of a corresponding direction and a corresponding magnitude, to drive the mover of the image sensor to move along each axis. In addition, the position detection sensor also feeds back the position signal of the image sensor to the target position controller. If the target position controller determines that an error between the re-detected image sensor position and the target position is not within the preset range, the target position controller continues to determine displacement that the image sensor should move in all directions, and the driver chip continues to search for crosstalk calibration data based on the displacement that should move in all directions, to obtain crosstalk compensation amounts in all directions, and performs crosstalk compensation on the displacement by using the crosstalk compensation amounts, to obtain the displacement for crosstalk compensation, finally, the image sensor is driven to move along each axial direction based on the displacement after crosstalk compensation. This cycle is performed until the target position controller determines, based on the position signal of the image sensor, that the error between the current position and the target position of the image sensor is within an allowed range, and the current driving closed-loop negative feedback control process is ended.

The optical image stabilization motor calibration data is calibration data that is obtained by performing crosstalk calibration on the optical image stabilization motor in advance. In a crosstalk calibration process, crosstalk calibration is performed based on displacements of the position detection sensor and an induction magnet in different directions, to obtain a magnetic induction sensitivity matrix, and crosstalk calibration data is obtained. The calibration data is stored in a memory of the optical image stabilization motor.

For example, the crosstalk calibration process may be as follows.

First, in an open-loop mode, the driver chip applies current signals in three different directions: the X-axis direction, the Y-axis direction, and the R-axis direction to the optical image stabilization motor, and obtains a relationship between a current code and a trip stroke in the three different directions: the X-axis direction, the Y-axis direction, and the R-axis direction, and a relationship between an image sensor position code and a trip stroke fed back by the position sensor. The stroke information can be obtained by using a high-precision laser scanner.

Then, a theoretical relationship between a current code and a travel stroke is compared with a relationship between a current code and a travel stroke that is obtained by the optical image stabilization motor through testing in an open-loop condition, to obtain crosstalk compensation amounts at different positions in different directions, and the crosstalk compensation amounts are written into a register of the optical image stabilization motor.

The crosstalk compensation is used to crosstalk compensate for the displacement amount, so that an actual displacement amount of the image sensor changes, the actual displacement amount changes, and a current value also changes.

For example, it is assumed that in a shake scenario, the driver chip obtains displacements in all directions by parsing the control signal of the target position controller, and determines, based on the displacement in the pitch (pitch) direction, that a magnitude of a drive current in the X-axis direction is 90 mA; determines, based on the displacement in the yaw (yaw) direction, that a magnitude of a drive current in the Y-axis direction is 90 mA; and determines, based on the displacement in the roll (roll) direction, that a drive current in the R-axis direction is 90 mA.

After crosstalk compensation, it is determined, based on the displacement obtained after crosstalk compensation in the pitch (pitch) direction, that the magnitude of the drive current in the X-axis direction is 90 mA; it is determined, based on the displacement obtained after crosstalk compensation in the yaw (yaw) direction, that the magnitude of the drive current in the Y-axis direction is 80 mA; and it is determined, based on the displacement obtained after crosstalk compensation in the roll (roll) direction, that the drive current in the R-axis direction is 90 mA. It can be learned from comparison that, before crosstalk compensation is performed, the magnitude of the drive current in the Y-axis direction is 90 mA, and after crosstalk compensation, the magnitude of the drive current in the Y-axis direction is 80 mA.

The driver chip applies a 90 mA current to a coil acting on an X-axis shift direction, to generate an electromagnetic thrust in the X-axis shift direction, and the electromagnetic thrust acts on the mover of the image sensor. Under the action of the electromagnetic thrust, the mover of the image sensor shifts a specific amount of displacement along the X-axis direction. A magnitude and direction of the electromagnetic thrust are determined by a magnitude and direction of the current applied to the coil.

Similarly, the driver chip applies an 80 mA current to a coil acting on a Y-axis shift direction, to generate an electromagnetic thrust in the Y-axis shift direction, and the electromagnetic thrust acts on the mover of the image sensor. Under the action of the electromagnetic thrust, the mover of the image sensor shifts a specific amount of displacement in the Y-axis direction. A magnitude and direction of the electromagnetic thrust are determined by a magnitude and direction of the current applied to the coil.

The driver chip applies a 90 mA current to a coil acting on an R-axis direction, to generate an electromagnetic thrust in the R-axis shift direction, and the electromagnetic thrust acts on the mover of the image sensor. Under the action of the electromagnetic thrust, the mover of the image sensor generates a torque in a specific direction, so that the mover of the image sensor rotates at a specific angle in an XY plane. A magnitude and direction of the rotating torque are determined by a magnitude and direction of the current applied to the coil.

In this way, the driver chip applies, based on the displacements in different directions, a current of a corresponding direction and a corresponding magnitude to coils in each direction, to drive the mover of the image sensor to move along the X-axis direction, the Y-axis direction, and the R-axis direction, and motion and control in the three directions are decoupled from each other.

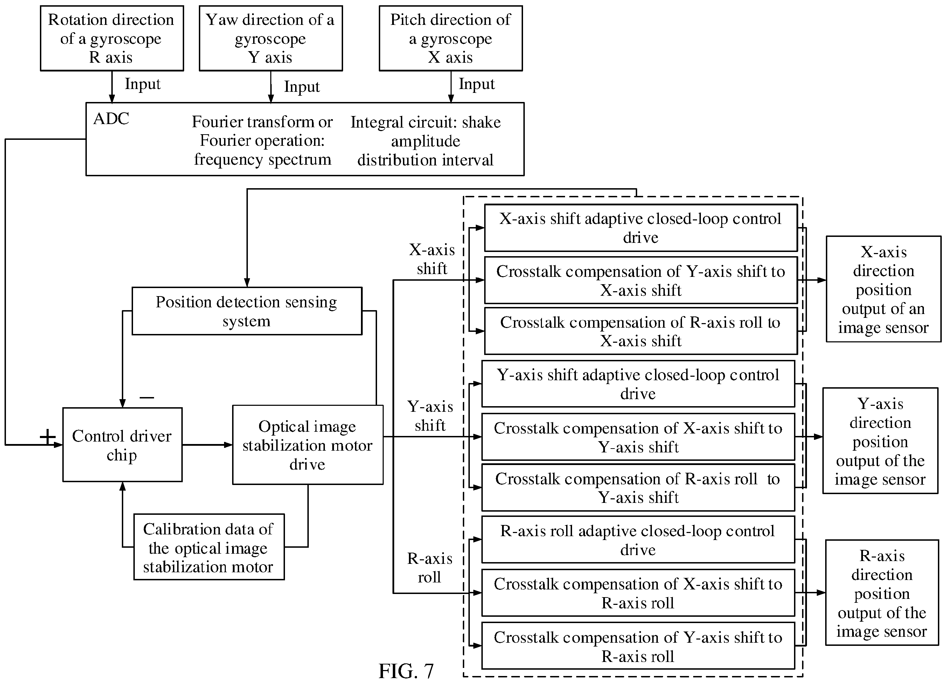

To better describe crosstalk compensation in a three-axis optical image stabilization scenario, the following describes an example with reference to a schematic block diagram of three-axis optical image stabilization drive control based on image sensor displacement shown in FIG. 7.

As shown in FIG. 7, original angular velocity signals in a pitch (pitch) direction, a yaw (yaw) direction, and a roll (roll) direction is collected by using a gyroscope and an accelerometer, and the original angular velocity signal is sequentially processed by using ADC, filtering, integral, Fourier transform, and the like, to obtain a shake amplitude and a shake frequency in each direction. After obtaining a shake amplitude and a shake frequency in each direction, the driver chip is controlled to obtain, based on the shake amplitude and the shake frequency in each direction, a target position that the image sensor should reach, and then obtain a start position signal of the image sensor by using a position detection and sensing system; and determine, based on the start position signal and the target position of the image sensor, a shake displacement compensation amount on an X axis, a shake displacement compensation amount on a Y axis, and a shake displacement compensation amount on an R axis of the image sensor. The driver chip drives, according to the shake displacement compensation amount in each axis, the image sensor to move along each axial direction, and acquiring, by using a position detection and sensing system, a position of the image sensor after shake compensation; then, displacements of the image sensor in each axial direction are determined based on the image sensor position and the target position that are fed back by the position detection sensor system, and then the optical image stabilization motor calibration data is read from the memory of the optical image stabilization motor. Then, calibration data is searched based on the optical image stabilization motor calibration data, to obtain the crosstalk compensation amount of the X axis, the crosstalk compensation amount of the Y axis, and the crosstalk compensation amount of the R axis.

As shown in FIG. 7, the X-axis crosstalk compensation amount includes crosstalk compensation of Y-axis shift to X-axis shift and crosstalk compensation of R-axis roll to X-axis shift.

The Y-axis crosstalk compensation amount includes crosstalk compensation of X-axis shift to Y-axis shift and crosstalk compensation of R-axis roll to Y-axis shift.

The R-axis crosstalk compensation amount includes crosstalk compensation of X-axis shift to R-axis roll and crosstalk compensation of Y-axis shift to R-axis roll.

The driver chip is controlled to compensate the shake displacement compensation amount in the X-axis direction by using the crosstalk compensation amount of the X-axis, to obtain the crosstalk compensation amount of the image sensor in the X-axis direction. Similarly, the Y-axis crosstalk compensation amount is used to compensate the shake displacement compensation amount in the Y-axis direction, to obtain a crosstalk compensation amount of the image sensor in the Y-axis direction. Compensating is performed on the shake displacement compensation amount in the R-axis direction by using the crosstalk compensation amount of the R-axis, to obtain the crosstalk compensation amount of the image sensor in the R-axis direction.

The driver chip is controlled to drive, by using the optical image stabilization motor based on the displacement amount after crosstalk compensation of each axis, the image sensor to shift in the X axis, shift in the Y axis, and roll in the R axis.

When driving the image sensor to move along each axis, a displacement detection sensing system can detect a real-time position of the image sensor in real time, and feed back the position of the image sensor to a control driver chip. The control driver chip continues driving closed-loop negative feedback control based on the feedback image sensor position and the target position.

In some embodiments, the control driver chip in FIG. 7 may include the target position controller, the comparator, and the driver chip in FIG. 6. The position detection sensing system includes a starting position detection sensor and a position detection sensor.

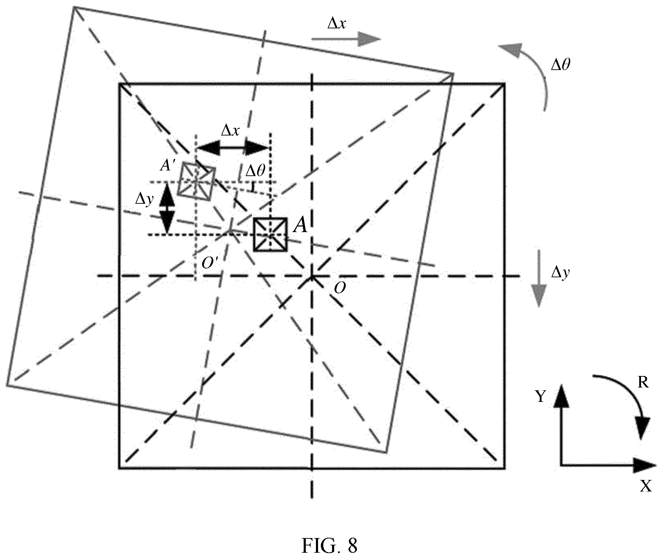

For example, refer to a schematic diagram of a three-axis optical image stabilization driving process shown in FIG. 8. A position of an image sensor 81 is a start position, and a position of an image sensor 82 is a target position. The image sensor 81 and the image sensor 82 are a same image sensor, and two different positions of the same sensor are distinguished by using different labels. A center point on the image sensor at the start position is O', and a center point on the image sensor at the target position is O. A position of a pixel unit on the image sensor at the start position is A', and a position of a pixel unit on the image sensor at the target position is A.

To suppress shaking, the image sensor needs to be driven to move from the start position to the target position. In FIG. 8, the pixel unit in the image sensor may move from the point A' to the point A, so that the image sensor may move from the start position to the target position.

As shown in FIG. 8, from the point A' to the point A, a displacement amount that should be moved in an X-axis direction is Δ*x*, a displacement amount that should be moved in a Y-axis direction is Δ*y*, and a displacement amount that should be moved in an R-axis direction is Δ*θ*.

It should be noted that, when the image sensor is driven to move along an X axis, a Y axis, and an R axis, a driving sequence may be arbitrary. For example, the image sensor may be first driven to move along the X-axis direction, then driven to move in the Y-axis direction, and finally driven to move along the R-axis direction. For another example, the image sensor may be simultaneously driven to separately move along the X axis, Y axis, and R axis.

It can be learned that the three-axis optical image stabilization system based on image sensor displacement provided in this embodiment of this application has small crosstalk, high optical image stability, no image rotation, and high precision of image stabilization drive control. In addition, shake suppression in three directions: a pitch (pitch) direction, a yaw (yaw) direction, and a roll (roll) direction is implemented.

As shown above, a driver chip may drive a mover of the image sensor by using an optical image stabilization motor, to drive the image sensor to move in all directions to perform optical shake compensation.

In some embodiments, the optical image stabilization motor may include, but is not limited to, a coil and a magnet. After the coil is energized, a Lorentz force is generated under an action of the magnet. The Lorentz force can act on the mover of the image sensor to push the mover of the image sensor to move. When a magnetic field is specific, a magnitude and a direction of the Lorentz force can be controlled by controlling a current magnitude and a current direction of the coil, to control a displacement amount and a displacement direction of the image sensor in each axis.

Specifically, coils are disposed on a first side, a second side, and a third side of the mover of the image sensor, and the coils on the first side, the second side, and the third side push the image sensor to move along the X-axis, Y-axis, and R-axis directions, to implement three-axis optical image stabilization.

In the optical image stabilization motor, a quantity of coils on each side, a coil disposing position on each side, a coil size, and the like may be set based on an actual requirement, which is not limited herein.

For example, the following separately describes electromagnetic drive solutions in different quantities of coils with reference to the accompanying drawings.

### (1) Three-coil electromagnetic drive solution

In the three-coil electromagnetic drive solution, the optical image stabilization motor may include a first coil, a second coil, and a third coil.

In some embodiments, the first coil is disposed on the first side of the mover of the image sensor and the second coil is disposed on the second side of the mover of the image sensor. The first side and the second side are opposite sides, that is, the first coil is located on an opposite side of the second coil. The third coil is disposed on the third side of the mover of the image sensor, and the third side is adjacent to the first side and the second side.

The driver chip outputs a first current signal by using a current generation structure (for example, a PWM drive structure) based on the displacement amount and the displacement direction that are of the image sensor in the X-axis direction. The first current signal is applied to the first coil, so that the first coil generates a force acting on the mover of the image sensor under the action of the magnetic field, to apply a force in the X-axis direction to the mover of the image sensor, and further drive the mover of the image sensor to shift in the X-axis direction.

The driver chip outputs a second current signal by using a current generation structure (for example, a PWM drive structure) based on the displacement amount and the displacement direction that are of the image sensor in the R-axis direction. The second current signal is applied to the second coil, so that the second coil generates a force acting on the mover of the image sensor under the action of the magnetic field, to apply a rotating torque along the R axis to the mover of the image sensor, and further drive the mover of the image sensor to rotate along the R axis.

The driver chip outputs a third current signal by using a current generation structure (for example, a PWM drive structure) based on the displacement amount and the displacement direction that are of the image sensor in the Y-axis direction. The third current signal is applied to the third coil, so that the third coil generates a force acting on the mover of the image sensor under the action of the magnetic field, to apply a force in the Y-axis direction to the mover of the image sensor, and further drive the mover of the image sensor to shift along the Y axis.

In some embodiments, to further reduce crosstalk, to reduce crosstalk compensation in driving control, in a mechanical structure design, a force center may coincide with a geometric center of the mover of the image sensor and a gravity center of the mover of the image sensor, to implement "multi-center integration". The force center is a force center of the force in the X-axis direction and the force in the Y-axis direction generated by the third coil.

In this case, a normal passing through the center of the first coil passes through the geometric center of the mover of the image sensor, a normal passing through the center of the second coil does not pass through the geometric center of the mover of the image sensor, and a normal passing through the center of the third coil passes through the geometric center of the mover of the image sensor. In addition, the gravity center of the mover of the image sensor coincides with the geometric center.

Certainly, in some other embodiments, if "multi-center integration" is not considered, both the normal passing through the center of the first coil and the normal passing through the center of the second coil may not pass through the center of the mover of the image sensor. However, in this case, more crosstalk is generated when the mover of the image sensor is pushed to move along each axis, and more crosstalk compensation needs to be performed by a control algorithm. The control algorithm needs to perform more crosstalk compensation, and this may reduce real-time performance of the optical image stabilization compensation control.

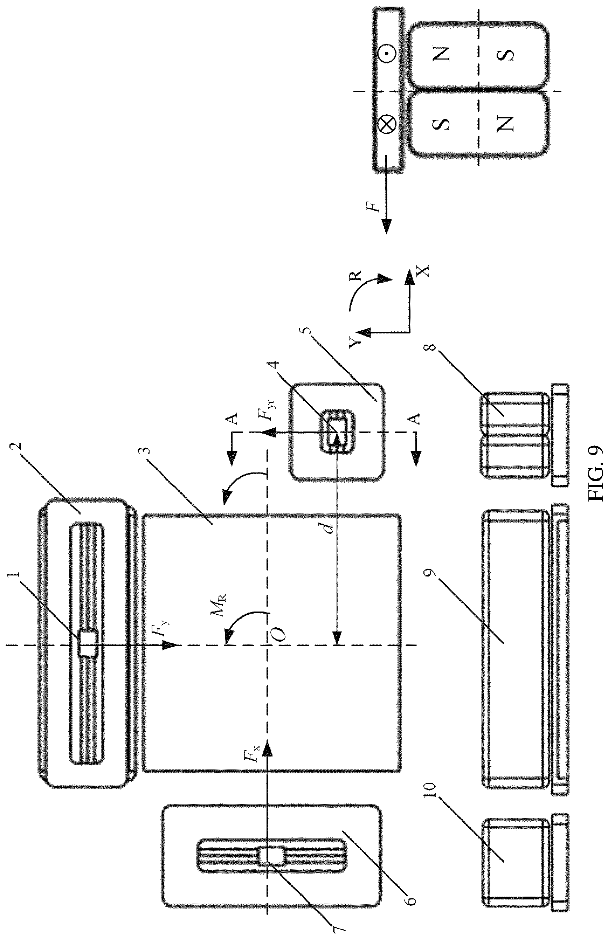

For example, refer to a schematic diagram of a three-coil electromagnetic drive solution shown in FIG. 9. After a coil 2, a coil 5, and a coil 6 are energized, a Lorentz force acting on a mover 3 of the image sensor may be generated under action of a magnet 8, a magnet 9, and a magnet 10, to push the mover 3 of the image sensor to move in an X axis, a Y axis, and an R axis.

The coil 6 corresponds to the foregoing first coil, the coil 5 corresponds to the foregoing second coil, and the coil 2 corresponds to the foregoing third coil. Therefore, in FIG. 9, the first side is a left side of the mover 3 of the image sensor, the second side is a right side of the mover 3 of the image sensor, and the third side is an upper side of the mover 3 of the image sensor. In this embodiment of this application, a magnetizing direction of the magnet may be that one magnet is uniformly magnetized at four poles, or may be that bipolar poles of two same magnets are connected together after being magnetized. As shown in FIG. 9, two magnets including an N pole and an S pole are connected together, and after the coil is energized, magnetic fields of the two magnets generate a leftward Lorentz force F.

Certainly, the magnetizing direction of the magnet may alternatively be opposite to that shown in FIG. 9. This is not limited herein.

As shown in FIG. 9, according to the Lorentz force and a left-hand rule, the coil 2 can generate a Lorentz force *F_{y}* along a Y-axis direction under an action of a magnetic field of the magnet 9 after being energized. The coil 5 can generate a Lorentz force *F_{yr}* in the Y-axis direction under an action of a magnetic field of the magnet 8 after being energized. The coil 6 can generate a Lorentz force *Fₓ* in an X-axis direction under an action of a magnetic field of the magnet 10 after being energized.

To implement "multi-center integration", positions of the coil 6 and the coil 2 are set, so that a normal passing through a center of the coil 6 passes through a center point O, and a normal passing through a center of the coil 2 passes through the center point O. In this way, a force center of *F_{y}* generated by the coil 2 and *Fₓ* generated by the coil 6 coincide with the center point O of the mover 3 of the image sensor. Therefore, no extra torque is generated by *F_{y}* and *Fₓ* at the point O and no extra rotation is generated by the mover 3 of the image sensor. In this way, crosstalk can be reduced, further, crosstalk compensation in drive control can be reduced, and real-time performance of drive control can be improved.

In other words, *Fₓ* only contributes to shift in the X-axis direction of the mover 3 of the image sensor, and no extra torque is generated at the point O, and thus no extra rotation of the mover 3 of the image sensor on an XY plane is generated. Alternatively, the mover of the image sensor does not generate an additional shift amount in the Y-axis direction. Similarly, *F_{y}* only contributes to shift in the Y-axis direction of the mover 3 of the image sensor, and no extra torque is generated at the point O, and thus no extra rotation of the mover 3 of the image sensor on an XY plane is generated. Alternatively, the mover of the image sensor does not generate an additional shift amount in the X-axis direction. In this way, when the mover 3 of the image sensor is driven to shift in the X-axis direction and/or the Y-axis direction, no rotation crosstalk and shift crosstalk are generated, and further, crosstalk compensation does not need to be performed on extra rotation amount and extra shift amount, and this reduces crosstalk compensation control of the control algorithm. In specific application, the driver chip may determine, based on a displacement amount and a displacement direction of the image sensor in the X-axis direction, a magnitude and a direction of a current applied to the coil 6; and determine, based on a displacement amount and a displacement direction of the image sensor in the Y-axis direction, a magnitude and a direction of the current applied to the coil 2.

It should be noted that, through a theoretical mechanical design, the mover of the image sensor may implement "multi-center integration", so that no crosstalk is generated when the mover of the image sensor is driven to move along the X-axis, Y-axis, and R-axis directions. However, in actual application, due to an assembly process, a product obtained through assembling according to the theoretical mechanical design still cannot completely implement "multi-center integration", and there is a specific error. Therefore, crosstalk is still generated when the mover of the image sensor is driven to displace along the X-axis, Y-axis, and R-axis directions. For the crosstalk caused by the assembly process, the displacement in each axial direction can be compensated by using the pre-calibrated crosstalk compensation amount in the closed-loop negative feedback control process. Alternatively, crosstalk compensation may not be performed, that is, crosstalk compensation is not performed in the closed-loop negative feedback control process.

In FIG. 9, the mover of the image sensor moves in a positive direction of the X axis under the action of *Fₓ*, and moves in a negative direction of the Y axis under the action of *F_{y}*.

The Lorentz force *F_{yr}* generated under the magnetic field after the coil 5 is energized generates torque *M_{R}* for the mover 3 of the image sensor because the Lorentz force *F_{yr}* does not coincide with the center O of the mover 3 of the image sensor and there is a force arm *d* . The mover 3 of the image sensor can rotate in the R-axis direction on the XY plane under the action of torque *M_{R}.* In FIG. 9, the mover 3 of the image sensor rotates counterclockwise on the XY plane under the action of torque *M_{R}.*

In addition, FIG. 9 also shows a position sensor 1, a position sensor 4, and a position sensor 7 with high precision. The position sensor 1 is placed in a middle area of the coil 2, the position sensor 4 is placed in a middle area of the coil 5, and the position sensor 7 is placed in a middle area of the coil 6.

The position sensor 1 matches with a magnet 9 to detect a position of the image sensor. The position sensor 4 matches with a magnet 8 to detect a position of the image sensor. The position sensor 7 matches with a magnet 10 to detect a position of the image sensor. In specific application, the position sensor 1 may detect a position of the image sensor in a yaw (yaw) direction in real time, and feed back the detected position to a target position controller. The position sensor 4 may detect a position of the image sensor in a roll (roll) direction in real time, and feed back the detected position to the target position controller. The position sensor 7 may detect a position of the image sensor in a pitch (pitch) direction in real time, and feed back the detected position to the target position controller.

It should be noted that FIG. 9 includes the position sensor 1, the coil 2, the mover 3 of the image sensor, the position sensor 4, the coil 5, the coil 6, and the position sensor 7 as a top view. The magnet 8, the magnet 9, and the magnet 10 are illustrated as a front view viewed from a negative direction of the Y-axis to a positive direction of the Y-axis. The magnet including the N pole and the S pole is shown as a side view from a positive direction of the X axis to a negative direction of the X axis.

It can be learned that a three-axis decoupling negative feedback in the pitch (pitch), the yaw (yaw), and the roll (roll) is implemented by using the position sensor 1, the position sensor 4, and the position sensor 7.

Based on the three-axis decoupling negative feedback in the pitch (pitch), the yaw (yaw), and the roll (roll) directions, mutual decoupling of three-axis drive control is implemented.

For example, with reference to FIG. 6 and FIG. 9, after obtaining the position that is of the image sensor and that is fed back by the position sensor 7 in the (pitch) direction, the target position controller compares the position that is of the image sensor and that is in the pitch (pitch) direction and that is currently fed back, and a position that the image sensor should reach in the pitch (pitch) direction, and determines whether an error between the current position of the image sensor in the yaw (yaw) direction and the position that the image sensor should reach is within an allowed range. If the error between the current position of the image sensor in the yaw direction and the position that the image sensor should reach is within the allowed range, the closed-loop drive control in the X-axis shift direction ends; and if the error between the current position of the image sensor in the yaw direction and the position that the image sensor should reach is not within the allowed range, the driver chip obtains, based on the current position of the image sensor in the pitch (pitch) direction and the position that the image sensor should reach, a displacement amount that the image sensor should move in the pitch (pitch) direction, and transmits the displacement amount to the driver chip. The driver chip applies a current of a corresponding magnitude and a corresponding direction to the coil 6 based on the displacement amount that the image sensor should move in the pitch (pitch) direction, so that the coil 6 generates a Lorentz force under the action of a magnetic field, and pushes the mover 3 of the image sensor to shift along the X axis. When the mover 3 of the image sensor is driven by the coil 6 to shift along the X-axis, the position sensor 7 cooperates with the magnet 10 to detect the position of the image sensor in the pitch (pitch) direction, and feeds back the position to the target position controller. This is repeated until the error between the current position of the image sensor in the pitch (pitch) direction and the position that the image sensor should reach is within the allowed range.

Similarly, after obtaining the position that is of the image sensor and that is fed back by the position sensor 1 in the yaw (yaw) direction, the target position controller compares the position that is of the image sensor and that is in the yaw (yaw) direction and that is currently fed back, and a position that the image sensor should reach in the yaw (yaw) direction, and determines whether an error between the current position of the image sensor in the yaw (yaw) direction and the position that the image sensor should reach is within an allowed range. If the error between the current position of the image sensor in the yaw direction and the position that the image sensor should reach is within the allowed range, the closed-loop drive control in the Y-axis shift direction ends; and if the error between the current position of the image sensor in the yaw direction and the position that the image sensor should reach is not within an allowed range, the driver chip obtains, based on the current position of the image sensor in the yaw (yaw) direction and the position that the image sensor should reach, a displacement amount that the image sensor should move in the yaw (yaw) direction, and transmits the displacement amount to the driver chip. The driver chip applies a current of a corresponding magnitude and a corresponding direction to the coil 2 based on the displacement amount that the image sensor should move in the yaw (yaw) direction, so that the coil 2 generates a Lorentz force under the action of a magnetic field, and pushes the mover 3 of the image sensor to shift along the X axis. When the mover 3 of the image sensor is driven by the coil 2 to shift along the Y axis, the position sensor 1 cooperates with the magnet 9 to detect the position of the image sensor in the yaw (yaw) direction, and feeds back the position to the target position controller. This is repeated until the error between the current position of the image sensor in the yaw (yaw) direction and the position that the image sensor should reach is within the allowed range.

After obtaining the position that is of the image sensor and that is fed back by the position sensor 4 in the roll (roll) direction, the target position controller compares the position that is of the image sensor and that is in the roll (roll) direction and that is currently fed back, and a position that the image sensor should reach in the roll (roll) direction, and determines whether an error between the current position of the image sensor in the roll (roll) direction and the position that the image sensor should reach is within an allowed range. If the error between the current position of the image sensor in the roll direction and the position that the image sensor should reach is within the allowed range, the closed-loop drive control in the R-axis roll direction ends; and if the error between the current position of the image sensor in the roll direction and the position that the image sensor should reach is not within the allowed range, the driver chip obtains, based on the current position of the image sensor in the roll (roll) direction and the position that the image sensor should reach, a displacement amount that the image sensor should move in the roll (roll) direction, and transmits the displacement amount to the driver chip. The driver chip applies a current of a corresponding magnitude and a corresponding direction to the coil 5 based on the displacement amount that the image sensor should move in the roll (roll) direction, so that the coil 5 generates a rotating torque under the action of a magnetic field, and pushes the mover 3 of the image sensor to rotate by a specific angle on the XY plane. When the mover 3 of the image sensor is driven by the coil 5 to roll along the XY plane, the position sensor 4 matches with the magnet 8 to detect the position of the image sensor in the roll (roll) direction, and feeds back the position to the target position controller. This is repeated until the error between the current position of the image sensor in the roll (roll) direction and the position that the image sensor should reach is within the allowed range.

To better describe the shake compensation control based on the three-coil electromagnetic drive solution shown in FIG. 9, several typical image sensor motion modes are as examples described below.

### 1.1. Image sensor shift mode

An X-axis direction shift mode is *Fₓ* ≠ 0, *F_{y}* =0, and *F_{yr}* =0 .

A Y-axis direction shift mode is *Fₓ* =0, *F_{y}* ≠ 0, and *F_{yr}* =0.

X-axis and Y-axis dual-axis direction shift mode are *Fₓ* ≠ 0, *F_{y}* ≠ 0 , and *F_{yr}* =0 .

In specific application, in the X-axis direction shift mode, the image sensor only needs to shift along the X-axis direction, to perform shake compensation in the X-axis direction. In this case, the driver chip may apply a current of a corresponding direction and a corresponding magnitude to the coil 6 through a PWM drive structure based on the displacement direction and the displacement of the image sensor in the X-axis direction, so that the coil 6 generates an acting force *Fₓ* acting on the mover 3 of the image sensor under the magnetic field. The mover 3 of the image sensor is driven to shift in the X-axis direction, and the image sensor is further driven to shift in the X-axis direction. If no crosstalk is generated in the Y axis and the R axis when the mover of the image sensor shifts in the X-axis direction, crosstalk compensation does not need to be performed or a crosstalk compensation amount is considered to be zero. Therefore, the driver chip may not need to apply a current to the coil 2 and the coil 6. When the driver chip drives the image sensor to shift along the X-axis direction by applying a current of a corresponding direction and a corresponding magnitude to the coil 6, the position sensor 7 obtains a position signal of the image sensor in the X-axis direction by using an induction magnet 10. The position sensor 1 obtains a position signal of the image sensor in the Y-axis direction by using an induction magnet 9. The position sensor 4 obtains a position signal of the image sensor in the R-axis direction by using an induction magnet 8 and feeds back the position signals to the target position controller. The target position controller performs driving closed-loop negative feedback control based on the feedback position signals.

It should be noted that solutions in various motion modes shown above and below are obtained based on "multi-center integration" of the mover of the image sensor under a theoretical mechanical design. However, in practical application, due to an assembly process, a product obtained through assembling according to the theoretical mechanical design cannot realize the complete "multi-center integration", and there is a specific error. Therefore, crosstalk is still generated when the mover of the image sensor is driven to shift in the X-axis, Y-axis, and R-axis directions.

In this case, to ensure anti-shake drive control precision, drive control crosstalk compensation may be performed. For example, in the X-axis direction shift mode, the driver chip drives the mover of the image sensor based on the shake displacement compensation amount of the image sensor in the X-axis direction, to drive the image sensor to shift in the X-axis direction. Then, the drive closed-loop negative feedback control mode is entered. In this mode, the target position controller obtains a real-time position of the image sensor in the X-axis direction, a real-time position in the Y-axis direction, and a real-time position in the R-axis direction that are fed back by the position sensor. The obtained feedback position is compared with the target position to obtain the displacement amount of the image sensor in the X-axis direction, the displacement amount of the image sensor in the Y-axis direction, and the displacement amount of the image sensor in the R-axis direction. The driver chip searches for crosstalk calibration data to obtain a crosstalk compensation amount in each axis, and performs crosstalk compensation on a displacement amount by using the crosstalk compensation amount in each axis to obtain displacement after crosstalk of each axis. Finally, based on the displacement amount of each axis after crosstalk, a current of a corresponding direction and magnitude is applied to a corresponding coil.

Similarly, in the Y-axis direction shift mode, the image sensor only needs to shift in the Y-axis direction, to perform shake compensation in the Y-axis direction. In this case, the driver chip may apply a current of a corresponding direction and a corresponding magnitude to the coil 2 through the PWM drive structure based on the displacement direction and the displacement amount of the image sensor on the Y axis, so that the coil 2 generates an acting force acting on the mover 3 of the image sensor under the magnetic field. The mover 3 of the image sensor is driven to shift in the Y-axis direction, and the image sensor is further driven to shift in the X-axis direction. If no crosstalk is generated on the X axis and the R axis when the mover of the image sensor shifts in the Y-axis direction, crosstalk compensation does not need to be performed. Therefore, the driver chip may not need to apply a current to the coil 6 and the coil 5.

Similar to the foregoing X-axis direction shift mode, in a driving closed-loop negative feedback process, the driver chip may perform crosstalk compensation on a displacement amount in each axial direction by using the crosstalk compensation amount, and then based on displacement obtained after crosstalk compensation in each axis, and apply a current of a corresponding magnitude and corresponding direction to a corresponding coil.

In the X-axis and Y-axis dual-axis direction shift mode, the image sensor needs to shift along the X-axis direction and shift in the Y-axis direction to perform shake compensation in the X-axis direction and the Y-axis direction separately. In this case, the driver chip may apply a current of a corresponding magnitude and a corresponding direction to the coil 6 based on the displacement direction and the displacement amount of the image sensor in the X-axis direction. Based on the displacement direction and the displacement amount in the Y-axis direction, a current of a corresponding magnitude and a corresponding direction is applied to the coil 2. If no crosstalk is generated on the R axis during X-axis direction shift and Y-axis direction shift, crosstalk compensation in the R axis direction does not need to be performed, or a crosstalk compensation amount is considered to be zero, and a current signal does not need to be applied to the coil 5.

### 1.2. Image sensor in-plane roll mode: Fₓ =0, F_{y} =0, and F_{yr} ≠ 0 .

In this mode, the image sensor needs to roll clockwise or counterclockwise on the XY plane to perform shake compensation in the R-axis direction.

At this time, the driver chip applies a current of a corresponding direction and a corresponding magnitude to the coil 5 through the PWM drive structure based on a roll angle and a roll direction of the image sensor, to generate a torque acting on the mover 3 of the image sensor, to drive the mover 3 of the image sensor to rotate by an angle clockwise or counterclockwise on the XY plane.

If no crosstalk is generated on the X axis and the Y axis when the image sensor is driven to roll on the XY plane, crosstalk compensation may not be performed, or a crosstalk compensation amount is considered to be zero, and no current needs to be applied to the coil 2 and the coil 6.

### 1.3. Image sensor shift and in-plane roll modes.

X-axis direction shift + in-plane roll mode: *Fₓ* ≠0, *F_{y}* =0, and *F_{yr}* ≠ 0 .

Y-axis direction shift + in-plane roll mode: *Fₓ*=0, *F_{y}* ≠ 0, and *F_{yr}* ≠ 0.

X-axis and Y-axis dual-axis direction shift + in-plane roll mode: *Fₓ* ≠ 0, *F_{y}* ≠ 0, and *F_{yr}* ≠ 0.

In the X-axis direction shift + in-plane roll mode, the image sensor needs to rotate a specific angle on the XY plane, and needs to shift in the X-axis direction to perform shake compensation in the X-axis direction and the R-axis direction. In this case, the driver chip may apply current signals of corresponding directions and corresponding magnitudes to the coil 5 and the coil 6 separately based on the displacement amount and displacement directions of the image sensor in the X-axial direction and the R-axial direction, to drive the mover 3 of the image sensor to shift in the X-axial direction, and rotates in the R-axial direction on the XY plane. If the image sensor does not generate crosstalk on the Y axis when performing shift in the X-axial direction and rotation in the R-axial direction, crosstalk compensation does not need to be performed or a crosstalk compensation amount is considered to be zero, and therefore, no current needs to be applied to the coil 2.

Similarly, for a driving process in the Y-axial direction + in-plane roll mode and the X-axis and Y-axis dual-axial direction shift + in-plane roll mode, refer to the foregoing description. Details are not described herein again.

It should be noted that, in this embodiment of this application, the gravity center and the geometric center of the mover of the image sensor coincide with the force center between the X-axis direction *Fₓ* and the Y-axis direction *F_{y}* , to ensure "three-center integration", and crosstalk compensation performed by a control algorithm can be reduced.

For example, in FIG. 9, the force center *Fₓ* in the X-axis direction and *F_{y}* in the Y-axis direction coincide with the point O, and the two forces do not generate additional rotating torque to the point O. Therefore, when the image sensor is driven to perform X-axis shift and Y-axis shift, no crosstalk compensation is performed on the additional rotating torque.

It is assumed that the force centers *Fₓ* and *F_{y}* do not coincide with the point O, the two forces generate additional rotating torque to the point O. To ensure driving control precision, crosstalk compensation needs to be performed on the additional rotating torque when the image sensor is driven to perform X-axis shift and/or Y-axis shift. That is, additional crosstalk compensation control is required.

It should also be noted that the three-coil electromagnetic drive solution in FIG. 9 may not only be applied to three-axis optical image stabilization, to achieve shake suppression in a pitch (pitch) direction, a yaw (yaw) direction, and a roll (roll) direction. The three-coil electromagnetic drive solution may also be applied to a dual-axis optical image stabilization solution. In this case, crosstalk compensation may be performed on additional rotation in the R-axis direction by using the coil 5. For example, when assembly is performed based on the mechanical design in FIG. 9, the force centers *Fₓ* in the X-axis direction and *F_{y}* in the Y-axis direction do not coincide with the point O due to the assembly process, and additional rotating torque is generated to the point O. Further, when the image sensor is driven to shift in the X-axis direction and/or the Y-axis direction, the image sensor generates an additional rotation effect, resulting in problems such as image rotation and optical image instability. To eliminate the additional rotating torque of the image sensor on the XY plane, a rotating torque in an opposite direction can be generated by using the coil 5 to counteract the additional rotating torque. For example, if the additional rotating torque causes the image sensor to rotate clockwise +*θ* as the image sensor shifts on the XY plane, a compensation rotating torque is generated by the coil 5 to drive the image sensor to rotate counterclockwise +*θ* on the XY plane, thereby counteracting the additional rotating torque.

### (2) Five-coil electromagnetic drive solution

Based on the foregoing three-coil electromagnetic drive solution, a coil on a side may be replaced with two or more coils, to obtain different electromagnetic drive solutions.

For example, if both the first coil and the second coil are replaced with two coils, and the third coil remains unchanged, a five-coil electromagnetic drive solution may be obtained. In this case, the first coil is replaced with the fourth coil and the fifth coil, and the second coil is replaced with the sixth coil and the seventh coil. The fourth coil and the fifth coil are both disposed on the first side of the mover of the image sensor, the sixth coil and the seventh coil are both disposed on the second side of the mover of the image sensor, and the third coil is disposed on the third side.

The fourth coil and the sixth coil are disposed opposite to each other, and belong to a same one-way control. Current magnitudes and directions of the fourth coil and the sixth coil are the same. Therefore, a Lorentz force generated in the magnetic field after the fourth coil is energized is the same as a Lorentz force generated in the magnetic field after the sixth coil is energized. Similarly, the fifth coil and the seventh coil are disposed opposite to each other, and belong to a same one-way control, and current magnitudes and directions of the fifth coil and the seventh coil are the same. Therefore, a Lorentz force generated in the magnetic field after the fifth coil is energized is the same as a Lorentz force generated in the magnetic field after the seventh coil is energized.

In specific application, to implement control that the fourth coil and the sixth coil belong to one way, the fourth coil and the sixth coil may be connected in series. Similarly, the fifth coil and the seventh coil may be connected in series. Certainly, the fourth coil and the sixth coil may not be connected in series.

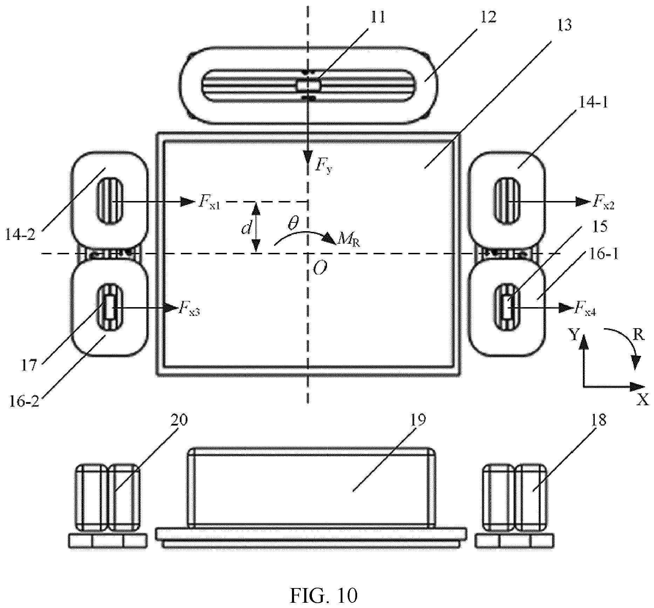

In the five-coil electromagnetic solution, a normal passing through a center of the fourth coil, a normal passing through a center of the sixth coil, a normal passing through a center of the fifth coil, and a normal passing through a center of the seventh coil may all not pass through the center of the mover of the image sensor. For example, FIG. 10 is a schematic diagram of a five-coil electromagnetic drive solution according to an embodiment of this application. As shown in FIG. 10, after a coil 12, a coil 14-1, a coil 14-2, a coil 16-1 and a coil 16-2 are energized, the coil 12, the coil 14-1, the coil 14-2, the coil 16-1 and the coil 16-2 can generate Lorentz forces acting on a mover 13 of an image sensor under actions of a magnet 18, a magnet 19 and a magnet 20, push the mover 13 of the image sensor move in an X-axis direction, a Y-axis direction, and an R-axis direction.

The coil 12 corresponds to the foregoing third coil, the coil 14-2 corresponds to the foregoing fourth coil, the coil 14-1 corresponds to the foregoing sixth coil, the coil 16-2 corresponds to the foregoing fifth coil, and the coil 16-1 corresponds to the foregoing seventh coil.

As shown in FIG. 10, according to the Lorentz force and the left-hand rule, the coil 12 can generate a Lorentz force *F_{y}* in the Y-axis direction under the action of a magnetic field of the magnet 19. After the coil 14-2 is energized, a Lorentz force *F*_{*x*1} along the X-axis direction is generated under an action of a magnetic field of the magnet 20. After the coil 16-2 is energized, a Lorentz force *F*_{*x*3} along the X-axis direction is generated under an action of a magnetic field of the magnet 20. After the coil 14-1 is energized, a Lorentz force *F*_{*x*2} along the X-axis direction is generated under an action of a magnetic field of the magnet 18. When the coil 16-1 is energized, a Lorentz force *F*_{*x*4} along the X-axis direction is generated under an action of a magnetic field of the magnet.

Similar to the above three-coil driving solution, in order to reduce crosstalk compensation in driving control, a gravity center and a geometric center of the mover 13 of the image sensor coincide with a force center of the Lorentz force in the Y-axis direction and the Lorentz force in the X-axis direction, guaranteeing "three-center integration".

A normal passing through a center of the coil 14-1, a normal passing through a center of the coil 14-2, a normal passing through a center of the coil 16-1 and a normal passing through a center of the coil 16-2 do not pass through a center O, so that the coil 14-1 generates *F*_{*x*2}, the coil 14-2 generates *F*_{*x*1}, the coil 16-1 generates *F*_{*x*4} and the coil 16-2 generates *F*_{*x*3} all without passing through the center point O.

The coil 14-1, the coil 14-2, the coil 16-1 and the coil 16-2 can generate a Lorentz force contributing to shift in the X-axis direction and a rotating torque *M_{R}* contributing to rotation in the R-axis direction. Magnitudes and directions of *F*_{*x*1}, *F*_{*x*2}, *F*_{*x*3}*,* and *F*_{*x*4} are controlled by magnitudes and directions of currents applied to respective coils, further to control a magnitude and direction of the rotating torque *M_{R}*, and a magnitude and direction of an acting force of the mover 13 of the image sensor in the X-axis direction. In this way, displacement control of the image sensor in the X-axis direction and the R-axis direction is implemented.

The coil 14-1 and the coil 14-2 are controlled by a same way, and current magnitudes and directions are the same, for example, *F*_{*x*1} = *F*_{*x*2}.

The coil 16-1 and the coil 16-2 are controlled by a same way, and current magnitudes and directions are the same, for example, *F*_{*x*3} = *F*_{*x*4}*.*

In addition, similar to the above three-coil electromagnetic drive solution, a position sensor 11, a position sensor 15, and a position sensor 17 are also shown in FIG. 10. The position sensor 11 is placed in a middle area of the coil 12, the position sensor 15 is placed in a middle area of the coil 16-1, and the position sensor 17 is placed in a middle area of the coil 16-2.

The position sensor 11 matches with the magnet 19, the position sensor 15 matches with the magnet 18, and the position sensor 17 matches with the magnet 20, to detect positions of the image sensor in a pitch (pitch) direction, a yaw (yaw) direction and a roll (roll) direction, and feeds back the detected positions to a target position controller.

To better describe the shake compensation control based on the five-coil electromagnetic drive solution shown in FIG. 10, several typical image sensor motion modes are as examples described below.

### 2.1. Image sensor shift mode

An X-axis direction shift mode is *F*_{*x*1}=*F*_{*x*3} ≠ 0, and *F_{y}* =0.

A Y-axis direction shift mode is *F*_{*x*1}=*F*_{*x*3} = 0, and *F_{y}* ≠ 0.

X-axis and Y-axis dual-axis direction shift modes are *F*_{*x*1}=*F*_{*x*2}=*F*_{*x*3}=*F*_{*x*4} ≠ 0 and *F_{y}* ≠ 0 .

### 2.2. Image sensor in-plane roll mode: Fₓ₁₌-Fₓ₃ ≠ 0, and F_{y} =0. Fₓ₁ = Fₓ₂, Fₓ₃ = Fₓ₄

When *F*_{*x*1} > 0, the image sensor rotates clockwise on an XY plane. When *F*_{*x*1} < 0, the image sensor rotates counterclockwise on the XY plane. A magnitude of a rotation angle on the XY plane can be achieved by controlling magnitudes of currents of the coil 14-1, the coil 14-2, the coil 16-1 and the coil 16-1.

### 2.3. Image sensor shift and in-plane roll modes

X-axis direction shift + in-plane roll mode: *F*_{*x*1} ≠ *F*_{*x*3} ≠ 0, and *F_{y}* =0.

When *F*_{*x*1} > *F*_{*x*3}*,* the image sensor rotates clockwise on the XY plane. When *F*_{*x*1} < *F*_{*x*3}*,* the image sensor rotates counterclockwise on the XY plane. *F*_{*x*1} = *F*_{*x*2}, *F*_{*x*3} = *F*_{*x*4}*.*

Rotating torque *M_{R}* = 2*d* * (*F*_{*x*1} - *F*_{*x*3}).

Y-axis direction shift + in-plane roll mode: *F*_{*x*1} = -*F*_{*x*3} ≠ 0, and *F_{y}* ≠ 0. A direction of the rotating torque *M_{R}* is controlled by controlling a direction of *F*_{*x*1}, thereby controlling the rotation direction.

X-axis and Y-axis dual-axis direction shift + in-plane roll mode: *F*_{*x*1} ≠ *F*_{*x*3} ≠ 0, and *F_{y}* ≠ 0.

In the various modes shown above, the driver chip may control the magnitude and direction of the Lorentz force and the direction and magnitude of the rotating torque by controlling the magnitude and direction of the coil current, and further control a displacement direction and a displacement amount of the image sensor in each axis.

For example, in the X-axis direction shift + in-plane roll mode, the image sensor needs to rotate a specific angle on the XY plane, and needs to shift in the X-axis direction to perform shake compensation in the X-axis direction and the R-axis direction. At this time, the driver chip may apply current signals of corresponding directions and corresponding magnitudes to the coil 14-1, the coil 14-2, the coil 16-1 and the coil 16-2 separately based on the displacement amount and displacement directions of the image sensor in the X-axis direction and the R-axis direction, to drive the mover 13 of the image sensor to shift in the X-axis direction and to rotate in the R-axis direction on the XY plane. If the image sensor does not generate crosstalk to the Y axis when performing shift in the X-axis direction and rotation in the R-axis direction, crosstalk compensation does not need to be performed or a crosstalk compensation amount is considered to be zero, and therefore, no current needs to be applied to the coil 12.

A drive control process in another mode is not described herein again. A driving process and a driving closed-loop negative feedback control process in different modes are similar to the foregoing three-coil electromagnetic drive solution. Details are not described herein again.

It is worth noting that a coil size and relative position in FIG. 10 can be adaptively adjusted based on an electromagnetic thrust size and a structural requirement of the mechanical design. In other words, a disposing position of the coil, the coil size, and the like are not limited in this embodiment of this application, and may be set based on an actual requirement.

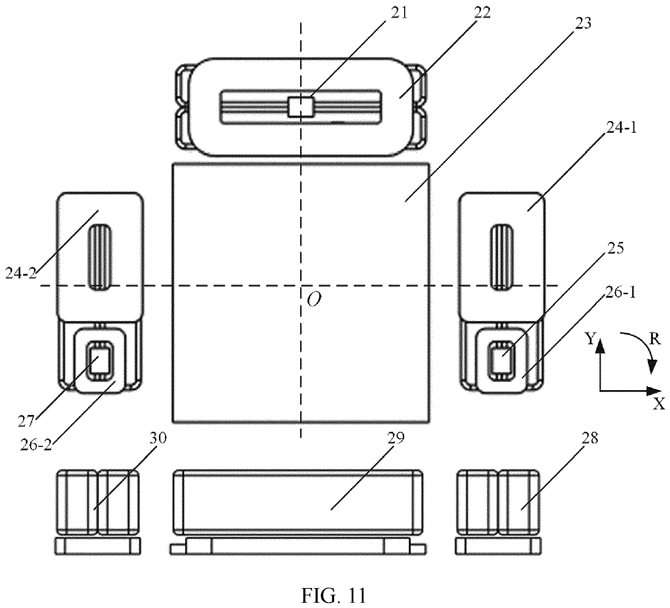

For example, refer to another schematic diagram of a five-coil electromagnetic drive solution according to an embodiment of this application shown in FIG. 11. After a coil 22, a coil 24-1, a coil 24-2, a coil 26-1 and a coil 26-2 are energized, a Lorentz force acting on a mover 23 of an image sensor may be generated under actions of a magnet 28, a magnet 29, and a magnet 30 to push the mover 23 of the image sensor to move in an X-axis direction, a Y-axis direction, and an R-axis direction.

The coil 22 corresponds to the foregoing third coil, the coil 24-2 corresponds to the foregoing fourth coil, the coil 24-1 corresponds to the foregoing sixth coil, the coil 26-2 corresponds to the foregoing fifth coil, and the coil 26-1 corresponds to the foregoing seventh coil.

Similar to FIG. 10, according to the Lorentz force and the left-hand rule, after the coil 22 is energized, the coil 22 can generate a Lorentz force in the Y-axis direction under an action of a magnetic field of the magnet 29. After the coil 24-2 is energized, a Lorentz force along the X-axis direction is generated under an action of a magnetic field of the magnet 30. After the coil 26-2 is energized, a Lorentz force along the X-axis direction is generated under an action of a magnetic field of the magnet 20. After the coil 24-1 is energized, a Lorentz force along the X-axis direction is generated under an action of a magnetic field of the magnet 28. After the coil 26-1 is energized, a Lorentz force along the X-axis direction is generated under an action of a magnetic field of the magnet.

FIG. 11 also shows a position sensor 21, a position sensor 25, and a position sensor 27. The position sensor 21 is placed in a middle area of the coil 22, the position sensor 25 is placed in a middle area of the coil 26-1, and the position sensor 27 is placed in a middle area of the coil 26-2.

The position sensor 21 matches with the magnet 29, the position sensor 25 matches with the magnet 28, and the position sensor 27 matches with the magnet 30 to detect positions of the image sensor in a pitch (pitch) direction, a yaw (yaw) direction and a roll (roll) direction, and feeds back the detected positions to a target position controller.

By comparing FIG. 10 and FIG. 11, it can be learned that the coil 14-2 and the coil 16-2 in FIG. 10 are of the same size, the coil 14-1 and the coil 14-2 are of the same size, and the coil 16-1 and the coil 16-2 are of the same size.

In FIG. 11, however, a size of the coil 14-2 and a size of the coil 16-2 are different, and the size of the coil 14-2 is larger than that of the coil 16-2. The coil 14-1 and the coil 14-2 are of the same size and the coil 16-1 and the coil 16-2 are of the same size.

In comparison, in FIG. 11, the size of the coil 14-2 is larger than the size of the coil 16-2, so that it can be ensured that an optical image stabilization angle in the X-axis direction of the image sensor under the same size is larger.

Similar to FIG. 10, in order to reduce crosstalk compensation in driving control, a gravity center and a geometric center of the mover 23 of the image sensor coincide with a force center of a Lorentz force in the Y-axis direction and a Lorentz force in the X-axis direction, guaranteeing "three-center integration".

The coil 24-1 and the coil 24-2 are controlled by a same way, and a magnitude and a direction of a current are the same. The coil 26-1 and the coil 26-2 are controlled by a same way, and a magnitude and a direction of a current are the same.

For a drive control process in the five-coil electromagnetic drive solution shown in FIG. 11, refer to the foregoing corresponding content. Details are not described herein again.

### (3) Six-coil electromagnetic drive solution

Based on the foregoing three-coil or five-coil electromagnetic drive solution, a coil on a side may be replaced with two or more coils, to obtain different electromagnetic drive solutions.

For example, based on the five-coil electromagnetic drive solution shown in FIG. 10, a six-coil electromagnetic drive solution may be obtained by replacing the coil 12 with two coils. For another example, based on the five-coil electromagnetic drive solution shown in FIG. 11, a six-coil electromagnetic drive solution may be obtained by replacing the coil 22 with two coils.

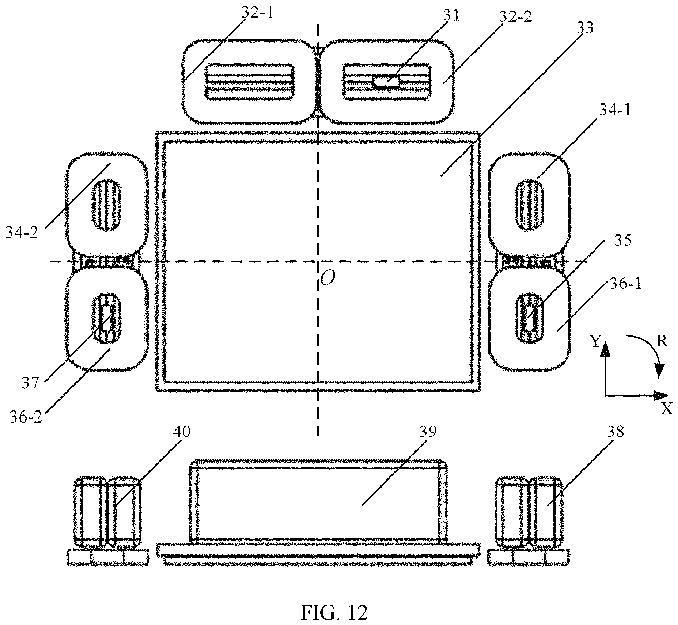

For example, FIG. 12 is a schematic diagram of a six-coil electromagnetic drive solution according to an embodiment of this application. After a coil 32-1, a coil 32-2, a coil 34-1, a coil 34-2, a coil 36-1, and a coil 36-2 are energized, Lorentz forces acting on a mover 33 of an image sensor may be generated under actions of a magnet 38, a magnet 39, and a magnet 40 to push the mover 33 of the image sensor to move in an X-axis direction, a Y-axis direction, and an R-axis direction.

Similar to FIG. 10, according to the Lorentz force and the left-hand rule, after the coil 32-1 and the coil 32-2 are energized, a Lorentz force in the Y-axis direction can be generated under an action of a magnetic field of the magnet 39. After the coil 34-1 and the coil 36-1 are energized, a Lorentz force in the X-axis direction can be generated under an action of a magnetic field of the magnet 38. After the coil 34-2 and the coil 36-2 are energized, a Lorentz force in the X-axis direction is generated under an action of a magnetic field of the magnet 40.

FIG. 12 also shows a position sensor 31, a position sensor 35, and a position sensor 37. The position sensor 31 is placed in a middle area of the coil 32-2, the position sensor 35 is placed in a middle area of the coil 36-1, and the position sensor 37 is placed in a middle area of the coil 36-2.

The position sensor 31 matches with the magnet 39, the position sensor 35 matches with the magnet 38, and the position sensor 37 matches with the magnet 40 to detect positions of the image sensor in a pitch (pitch) direction, a yaw (yaw) direction and a roll (roll) direction, and feeds back the detected positions to a target position controller.

Similar to the three-coil electromagnetic drive solution and the five-coil electromagnetic drive solution mentioned above, in order to reduce crosstalk compensation in driving control, a gravity center and a geometric center of the mover 33 of the image sensor coincide with a force center of a Lorentz force in the Y-axis direction and a Lorentz force in the X-axis direction, guaranteeing "three-center integration". The coil 34-1 and the coil 34-2 are controlled by a same way, and a magnitude and a direction of a current are the same. The coil 36-1 and the coil 36-2 are controlled by a same way, and a magnitude and a direction of a current are the same.

It may be understood that a Lorentz force generated by the coil 32-1 and a Lorentz force generated by the coil 32-2 are of the same magnitude and in the same direction. There is a force arm between the Lorentz force generated by the coil 32-1 and a force center O, which produces a rotating torque. Similarly, there is a force arm between the Lorentz force generated by the coil 32-2 and the force center O, which produces a rotating torque. The two rotating torques counteract with each other, so that the mover 33 of the image sensor does not rotate on an XY plane when it shifts along the Y axis. That is, the Lorentz forces generated by the coil 32-1 and the coil 32-2 contribute only to Y-axis shift of the mover of the image sensor.

Similar to the above five-coil electromagnetic drive solution, current directions and current magnitudes of the coil 34-2 and the coil 34-1 are the same, that is, the two coils are controlled by a same way, and magnitudes and directions of the Lorentz force generated are the same. Current directions and current magnitudes of the coil 36-1 and the coil 36-2 are the same, that is, the two coils are controlled by a same way, and magnitudes and directions of the Lorentz force generated are the same. For descriptions of driving the mover 33 of the image sensor to rotate on the R axis and shift on the X axis based on the coil 34-1, the coil 34-1, the coil 36-1, and the coil 36-2, refer to the foregoing five-coil electromagnetic drive solution. Details are not described herein again.

FIG. 12 shows a drive control process of the six-coil electromagnetic drive solution. For details, refer to the foregoing corresponding content. Details are not described herein again.

It should be noted that the electromagnetic drive solution in this embodiment of this application is not limited to the three-coil, five-coil, and six-coil electromagnetic drive solutions mentioned above. Alternatively, another variant solution may be obtained based on the foregoing content. For example, based on the three-coil electromagnetic drive solution shown in FIG. 9, three coils may be used to replace the coil 6 and three coils may be used to replace the coil 5 to obtain a seven-coil electromagnetic drive solution. For another example, based on the three-coil electromagnetic drive solution shown in FIG. 9, three coils may be used to replace the coil 6, three coils may be used to replace the coil 5, and three coils may be used to replace the coil 2, to obtain a nine-coil electromagnetic drive solution.

In this embodiment of this application, different electromagnetic drive solutions may be obtained when a coil size, a coil quantity, and a coil position are different. Driving control logics of different electromagnetic drive solutions are similar, and a driver chip applies a current of a corresponding magnitude and a corresponding direction to a corresponding coil based on a displacement amount and a displacement direction of the image sensor in each axis, to generate a Lorentz force acting on a mover of the image sensor, to drive the image sensor to move in each direction to perform shake compensation. The difference is that an electromagnetic drive solution with a large quantity of coils has a greater electromagnetic drive force and better drive stability.

It may be understood that, in order to reduce crosstalk compensation in a driving control process, a gravity center and a geometric center of the mover of the image sensor coincide with a force center of the Lorentz force in the Y-axis direction and the Lorentz force in the X-axis direction, guaranteeing "three-enter integration".

It should be noted that the driving manner in this embodiment of this application is not limited to the electromagnetic driving manner mentioned above. In addition, in the electromagnetic drive solution mentioned above, the driver chip may not perform crosstalk compensation, or may perform crosstalk compensation.

For example, based on the electromagnetic drive solution shown in FIG. 9, after receiving a control signal of the target position controller, the driver chip parses the control signal to obtain a displacement amount in the X-axis direction, a displacement amount in the Y-axis direction, and a displacement amount in the R-axis direction of the image sensor. A current is applied to the coil 6 through a PWM drive structure based on the displacement amount and the displacement direction in the X-axis direction, a current is applied to the coil 2 based on the displacement amount and the displacement direction in the Y-axis direction, and a current is applied to the coil 5 based on the displacement amount and the displacement direction in the R-axis direction.

Alternatively, in a driving closed-loop negative feedback process, after the target position controller obtains the displacement amount of the image sensor in each axis based on a position of the image sensor fed back by the position sensor, the driver chip obtains a control signal of the target position controller, to obtain a displacement amount in that X-axis direction, a displacement amount in the Y-axis direction, and a displacement amount in the R-axis direction, and perform crosstalk calibration data search based on the displacement amount of the image sensor in each axis to obtain a crosstalk compensation amount in each axis. The crosstalk compensation amount is used to compensate for the displacement amount in each axial direction. Finally, corresponding currents are applied to the coil 2, the coil 5, and the coil 6 based on the displacement amount after crosstalk compensation.

According to the three-axis optical image stabilization system based on image sensor displacement provided in this embodiment of this application, impact of crosstalk can be reduced, to improve image stabilization drive control precision, and problems such as image rotation and optical image instability can be resolved. In addition, the three-axis optical image stabilization system based on image sensor displacement in this embodiment of this application has a small hysteresis. No hysteresis means that time for which the image sensor is driven back and forth on an axis is the same. For example, time of driving the image sensor in the X-axis direction by +100 um and -100 um is the same.

In this embodiment of this application, an optical image stabilization effect may be reflected in image clarity of a camera module and an electronic device including the camera module. In specific application, an image stabilization compression ratio may be used to measure the optical image stabilization effect.

The image stabilization compression ratio is an important performance index for evaluating an image stabilization device, and may be obtained through calculation by using a blurred pixel contrast ratio before and after the optical image stabilization system is enabled. It may be specifically expressed as:

For example, the image stabilization compression ratio (dB) = -20 Log((a quantity of OIS ON pixels - a quantity of Static pixels)/(a quantity of OIS OFF pixels - a quantity of Static pixels)) = -20 Log ((D2-D0)/(D1-D0)).

D0, D1, and D2 separately represent an actual pixel quantity corresponding to the camera module corresponding to the optical image stabilization system under a static condition, an actual pixel quantity corresponding to the OIS function disabled, and an actual pixel quantity corresponding to the OIS function enabled. A larger value of the image stabilization compression ratio (dB) indicates a better image stabilization effect of the optical image stabilization system. If the image stabilization compression ratio is 0 or a negative value, it indicates that the optical image stabilization system does not work normally.

In the three-axis optical image stabilization scenario, image stabilization compression ratios of the camera module in three directions are first measured, and then the three-axis optical image stabilization effects are comprehensively evaluated based on test values.

It can be learned from the foregoing that this embodiment of this application provides a plurality of different electromagnetic drive solutions, to implement three-axis optical image stabilization. In addition, in a plurality of electromagnetic drive solutions, the moving unit part of the image sensor implements "multi-center integration", thereby reducing crosstalk generated in a drive process, reducing crosstalk compensation control of a control algorithm, and improving real-time performance of drive control.

Certainly, dual-axis optical image stabilization may also be applied to the plurality of different electromagnetic drive solutions provided above. In this case, additional rotation compensation of the image sensor in the XY plane may be implemented by using crosstalk compensation. In this way, optical image stability is relatively high, and there is no image rotation. For example, in the three-coil electromagnetic drive solution shown in FIG. 9, when the image sensor is pushed to be displaced in the X-axis direction and the Y-axis direction by the coil 6 and the coil 2, the angle of additional rotation of the image sensor in the R-axis is detected by the position detection sensor 4. Then, the coil 5 pushes the image sensor to rotate by a specific angle in the R axis in the reverse direction, to compensate for the rotation amount generated by the crosstalk.

An embodiment of this application further provides an optical image stabilization method based on image sensor displacement, and the method may be applied to a driver chip. The method first obtains shake data, and determines a target position that the image sensor should reach based on the shake data. Then, based on a current position of the image sensor and the target position that the image sensor should reach, a displacement amount by which the image sensor should shift in each axis is determined. Next, the image sensor is driven to move in each axial direction based on the displacement amount that the image sensor should shift in each axis. After the target position controller generates a new control signal based on a position signal of the image sensor fed back by a position detection sensor, the driver chip obtains the new control signal, and obtains the displacement amount of the image sensor in each axis based on the new control signal, and based on the displacement amount of the image sensor in each axis, crosstalk calibration data search is performed to find a corresponding crosstalk compensation amount, and the crosstalk compensation amount is used to compensate for the displacement amount in each axis, to obtain a displacement amount after crosstalk compensation. Finally, the image sensor is driven to move in each axial direction based on the displacement amount after crosstalk compensation.

In this way, after the displacements that should be moved in each direction are obtained, crosstalk compensation is performed on the displacements in each direction according to the pre-calibrated crosstalk compensation values, thereby reducing impact of crosstalk, and improving image stabilization drive control precision.

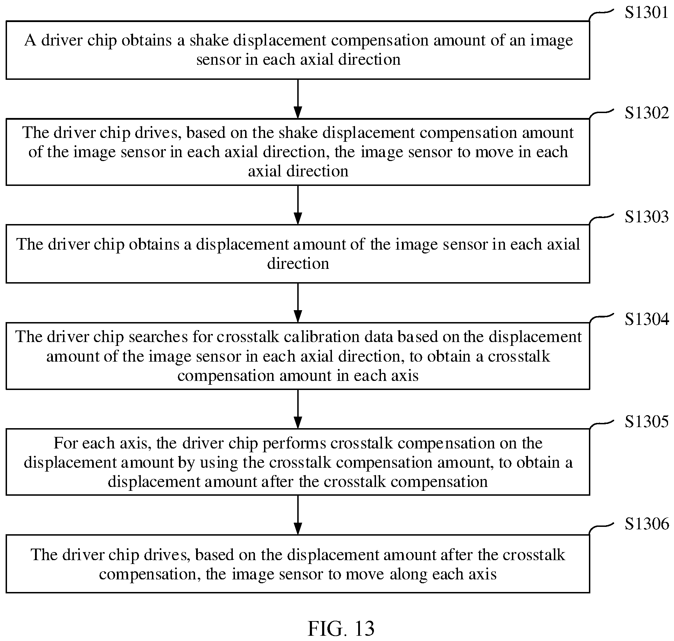

For example, FIG. 13 is a schematic block flowchart of an optical image stabilization method based on image sensor displacement according to an embodiment of this application. The method may include the following steps.

Step S1301: A driver chip obtains a shake displacement compensation amount of an image sensor in each axial direction.

In some embodiments, the driver chip may receive a control signal of a target position controller, to obtain the shake displacement compensation amount and a target position of the image sensor in each axial direction.

The target position controller may obtain, based on shaking frequencies and the shaking amplitudes in each direction, a target position that the image sensor should reach to suppress shaking, and based on the target position and a start position of the image sensor through a feedback function of a comparator, the shake displacement compensation amount of the image sensor in each axial direction is obtained. Then, control signals are generated based on the shake displacement compensation amount in each direction, and the control signals are transmitted to the driver chip.

In a dual-axis optical image stabilization scenario, the driver chip may obtain shake displacement compensation amounts in an X-axis direction and a Y-axis direction. In a three-axis optical image stabilization scenario, the driver chip may obtain shake displacement compensation amounts in an X-axis direction, a Y-axis direction, and an R-axis direction.

Step S1302: The driver chip drives, based on the shake displacement compensation amount of the image sensor in each axial direction, the image sensor to move in each axial direction.

It may be understood that a specific driving process may also vary according to a driving manner. For example, in some embodiments, when the driving manner is the electromagnetic driving manner mentioned above, the driver chip may determine, based on the shake displacement compensation amount in each axis, current signals to be applied to each coil, where the current signal includes a current magnitude and a current direction. That is, by controlling the magnitude and direction of the coil current, the displacement amount and the displacement direction of the image sensor are controlled, to implement control decoupling of three-axis motion.

For the electromagnetic drive solution, refer to the foregoing three-coil electromagnetic drive solution, five-coil electromagnetic drive solution, and the like. This is not limited herein.

For example, using the three-coil electromagnetic drive solution shown in FIG. 9 as an example, the driver chip applies a current signal of a corresponding magnitude and a corresponding direction to a coil 6 based on a shake displacement compensation amount in the X-axis direction, applies a current signal of a corresponding magnitude and a corresponding direction to a coil 2 based on a shake displacement compensation amount in the Y-axis direction, and applies a current signal of a corresponding magnitude and a corresponding direction a coil 5 based on a shake displacement compensation amount in the R-axis direction.

Step S 1303 : The driver chip obtains a displacement amount of the image sensor in each axial direction.

In some embodiments, after the driver chip drives the image sensor to move in an axial direction based on the shake displacement compensation amount in each axis, a position detection sensor may feed back a current position of the image sensor to the target position controller. The target position controller compares a difference between the current position of the image sensor and the target position, to determine whether to end the current drive control. If the current driving control does not end, the displacement amount of the image sensor in each axial direction is obtained based on the difference between the current position and the target position, and the displacement amount of the image sensor in each axial direction is transmitted to the driver chip.

Step S1304: The driver chip searches for crosstalk calibration data based on the displacement amount of the image sensor in each axial direction, to obtain a crosstalk compensation amount in each axis.

The crosstalk calibration data may be obtained in advance by using a crosstalk calibration process.

For each axis, the crosstalk compensation amount in the axis may be found from the crosstalk calibration data based on the displacement amount in the axial direction.

Step S1305: For each axis, the driver chip performs crosstalk compensation on the displacement amount by using the crosstalk compensation amount, to obtain a displacement amount after crosstalk compensation.

Step 51306: The driver chip drives, based on the displacement amount after crosstalk compensation, the image sensor to move in each axis.

For example, after obtaining the displacement amount after crosstalk compensation of the image sensor in each axial direction, the driver chip applies a current signal of a corresponding direction and a corresponding magnitude to the coil, to drive the image sensor to move in an X axis, a Y axis, and an R axis.

It may be understood that, in a closed-loop negative feedback control process, a plurality of times of drive control may need to be performed. For a side of the driver chip, step S1303 to step S1306 may be cyclically performed for a plurality of times until a controller determines that an error between the current position and the target position of the image sensor is within a specific range.

It can be learned that, in this embodiment, crosstalk compensation is performed on a displacement amount of the image sensor in each axial direction by using a calibrated crosstalk compensation amount, and this reduces impact of crosstalk. The crosstalk may be caused by a mechanical design defect, or may be caused by an assembly process. A cause of generation of the crosstalk is not limited herein.

It should be noted that, in some other embodiments, the driver chip may not perform crosstalk compensation. In this case, in the process of entering the closed-loop negative feedback control, after receiving the control signal from the controller, the driver chip obtains the displacement amount of the image sensor in each axial direction by parsing the control signal, and based on the displacement amount in each axial direction, a current of a corresponding magnitude and direction is applied to a corresponding coil. The process is cyclically executed until the controller determines that the error between the current position of the image sensor and the target position is within a specific range.

It can be learned from the foregoing description that, embodiments of this application provide a crosstalk compensation process and an electromagnetic drive solution. In some embodiments, embodiments of this application may include only an electromagnetic drive solution, that is, crosstalk compensation is not performed, but three-axis optical image stabilization based on image sensor displacement is implemented based on the foregoing electromagnetic drive solution. Only a crosstalk compensation process may be included, that is, the driver chip performs crosstalk compensation based on a pre-calculated crosstalk compensation amount, and the electromagnetic drive solution in an optical image stabilization motor is not the solution mentioned above. Certainly, this embodiment of this application may also include both the crosstalk compensation and the electromagnetic drive solution. In other words, in this embodiment of this application, not only the three-axis optical image stabilization based on image sensor displacement is implemented based on the foregoing electromagnetic drive solution, but also the driver chip performs crosstalk compensation by using the crosstalk compensation amount based on the implementation of the three-axis optical image stabilization.

An embodiment of this application provides a camera module. The camera module may include a lens group, an image sensor, and all or a part of the optical image stabilization system shown in FIG. 5 or FIG. 6.

For example, the camera module may include a lens group, an image sensor, an optical image stabilization motor, and a driver chip. The optical image stabilization motor includes a PWM drive structure, a coil, a magnet, a position sensor, and a mover of an image sensor. The mover of the image sensor is connected to the image sensor, and the image sensor can move with the movement of the mover of the image sensor. Further, a distribution status and a setting position of the coils may be shown in the electromagnetic drive solution of three coils, five coils, or six coils mentioned above. For a process of controlling the optical image stabilization drive, refer to the foregoing description. Details are not described herein again.

The electronic device provided in this embodiment of this application may include a memory, a processor, and a computer program that is stored in the memory and that can run on the processor. When executing the computer program, the processor implements the method in any one of the foregoing method embodiments. Alternatively, the electronic device includes the system in any one of the foregoing system embodiments.

An embodiment of this application further provides a computer-readable storage medium. The computer-readable storage medium stores a computer program. When the computer program is executed by a processor, steps in the foregoing method embodiments can be implemented.

An embodiment of this application provides a computer program product. When the computer program product runs on an electronic device, the electronic device is enabled to implement the steps in the foregoing method embodiments when executing the computer program product.

An embodiment of this application further provides a chip system. The chip system includes a processor, the processor is coupled to a memory, and the processor executes a computer program stored in the memory, to implement the method in the foregoing method embodiments. The chip system may be a single chip or a chip module including a plurality of chips.

In the foregoing embodiments, the description of each embodiment has a focus. For a part that is not described in detail or recorded in an embodiment, refer to related descriptions in other embodiments. It should be understood that sequence numbers of the steps do not mean execution sequences in the foregoing embodiments. The execution sequences of the processes should be determined based on functions and internal logic of the processes, and should not be construed as any limitation on the implementation processes of embodiments of this application. In addition, in the descriptions of the specification and claims of this application, the terms "first", "second", "third", and the like are merely intended for the purpose of differentiated description, but shall not be understood as an indication or an implication of relative importance. Reference to "an embodiment", "some embodiments", or the like described in the specification of this application indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner.

In conclusion, the foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A three-axis optical image stabilization system based on image sensor displacement, wherein the system comprises a sensor, a controller, a driver chip, and an optical image stabilization motor, wherein
the sensor is configured to collect first shake data in a first direction, second shake data in a second direction, and third shake data in a third direction;
the controller is configured to obtain a displacement amount of an image sensor in a first axial direction, a displacement amount of the image sensor in a second axial direction, and a displacement amount of the image sensor in a third axial direction based on the first shake data, the second shake data, and the third shake data;
the driver chip is configured to separately drive, by using the optical image stabilization motor based on the displacement amount of the image sensor in the first axial direction, the displacement amount of the image sensor in the second axial direction, and the displacement amount of the image sensor in the third axial direction, the image sensor to shift in each axial direction;
the optical image stabilization motor comprises a mover of the image sensor, a magnet, a first coil, a second coil, and a third coil, the first coil is disposed on a first side of the mover of the image sensor, the second coil is disposed on a second side of the mover of the image sensor, the third coil is disposed on a third side of the mover of the image sensor, the first side the second side are opposite sides, the third side and the first side are adjacent sides, and the magnet is configured to generate a magnetic field;
after the first coil, the second coil, and the third coil are energized, an acting force acting on the mover of the image sensor is generated under an action of the magnetic field, to push the mover of the image sensor to shift in each axial direction; and
the mover of the image sensor is connected to the image sensor, and the image sensor moves as the mover of the image sensor moves.

2. The system according to claim 1, wherein the driver chip is specifically configured to:
apply a first current signal to the first coil based on the displacement amount in the first axial direction, so that the first coil generates, under the action of the magnetic field, a first Lorentz force acting on the mover of the image sensor, wherein the first Lorentz force is used to drive the mover of the image sensor to shift in the first axial direction;
apply a second current signal to the second coil based on the displacement amount in the second axial direction, so that the second coil generates, under the action of the magnetic field, a second Lorentz force acting on the mover of the image sensor, wherein the second Lorentz force is used to generate a rotating torque to drive the mover of the image sensor to rotate in the second axial direction; and
apply a third current signal to the third coil based on the displacement amount in the third axial direction, so that the third coil generates, under the action of the magnetic field, a third Lorentz force acting on the mover of the image sensor, wherein the third Lorentz force is used to drive the mover of the image sensor to shift in the third axial direction, wherein
a first center line of the first coil passes through a center point of the mover of the image sensor, and the first center line passes through a center of the first coil and is parallel to the first axial direction;
a second center line of the second coil does not pass through the center point of the mover of the image sensor, and the second center line passes through a center of the second coil and is parallel to the first axial direction; and
a third center line of the third coil passes through the center point of the mover of the image sensor, and the third center line passes through a center of the third coil and is parallel to the third axial direction.

3. The system according to claim 1, wherein the first coil comprises a fourth coil and a fifth coil, the second coil comprises a sixth coil and a seventh coil, the fourth coil and the sixth coil are disposed opposite to each other, and the fifth coil and the seventh coil are disposed opposite to each other; and
the driver chip is specifically configured to:
apply a fourth current signal to the fourth coil and the sixth coil based on the displacement amount in the first axial direction and the displacement amount in the second axial direction, so that the fourth coil generates, under the action of the magnetic field, a fourth Lorentz force acting on the mover of the image sensor, and the sixth coil generates, under the action of the magnetic field, a fifth Lorentz force acting on the mover of the image sensor;
apply a fifth current signal to the fifth coil and the seventh coil based on the displacement amount in the first axial direction and the displacement amount in the second axial direction, so that the fifth coil generates, under the action of the magnetic field, a sixth Lorentz force acting on the mover of the image sensor, and the seventh coil generates, under the action of the magnetic field, a seventh Lorentz force acting on the mover of the image sensor; and
apply a sixth current signal to the third coil based on the displacement amount in the third axial direction, so that the third coil generates, under the action of the magnetic field, a Lorentz force acting on the mover of the image sensor, to drive the mover of the image sensor to shift in the third axial direction, wherein
the mover of the image sensor shifts in the first axial direction and/or the second axial direction under actions of the fourth Lorentz force, the fifth Lorentz force, the sixth Lorentz force, and the seventh Lorentz force.

4. The system according to claim 3, wherein none of a fourth center line of the fourth coil, a fifth center line of the fifth coil, a sixth center line of the sixth coil, and a seventh center line of the seventh coil passes through a center point of the mover of the image sensor, and a third center line of the third coil passes through the center point of the mover of the image sensor; and
the third center line passes through a center of the third coil and is parallel to the third axial direction, the fourth center line passes through a center of the fourth coil and is parallel to the first axial direction, the fifth center line passes through a center of the fifth coil and is parallel to the first axial direction, the sixth center line passes through the sixth coil and is parallel to the first axial direction, and the seventh center line passes through a center of the seventh coil and is parallel to the first axial direction.

5. The system according to claim 3 or 4, wherein coils of the fourth coil, the fifth coil, the sixth coil, and the seventh coil are all the same; or
a coil size of the fourth coil is the same as a coil size of the sixth coil, a coil size of the fifth coil is the same as a coil size of the seventh coil, and the coil size of the fourth coil is different from the coil size of the fifth coil.

6. The system according to any one of claims 3 to 5, wherein the third coil comprises an eighth coil and a ninth coil; and
the driver chip is specifically configured to:
apply the sixth current signal to the eighth coil and the ninth coil based on the displacement amount in the third axial direction, so that the eighth coil generates, under the action of the magnetic field, an eighth Lorentz force acting on the mover of the image sensor, and the ninth coil generates, under the action of the magnetic field, a ninth Lorentz force acting on the mover of the image sensor, wherein
the mover of the image sensor shifts in the third axial direction under a joint action of the eighth Lorentz force and the ninth Lorentz force.

7. The system according to claim 6, wherein a distance between the center point of the mover of the image sensor and a center of the eighth coil is equal to a distance between the center point of the mover of the image sensor and a center of the ninth coil.

8. The system according to any one of claims 1 to 7, wherein a gravity center of the mover of the image sensor coincides with a geometric center of the mover of the image sensor.

9. The system according to any one of claims 1 to 8, wherein the system comprises a position detection module, configured to detect a position of the image sensor.

10. The system according to claim 9, wherein the position detection module comprises a first position sensor, a second position sensor, and a third position sensor;
the first position sensor is configured to cooperate with a first magnet, to obtain a position signal of the image sensor in the first axial direction;
the second position sensor is configured to cooperate with a second magnet, to obtain a position signal of the image sensor in the second axial direction;
the third position sensor is configured to cooperate with a third magnet, to obtain a position signal of the image sensor in the third axial direction;
the first position sensor is disposed in a middle area of the first coil, the second position sensor is disposed in a middle area of the second coil, and the third position sensor is disposed in a middle area of the third coil; and
when the first coil comprises the fourth coil and the fifth coil, and the second coil comprises the sixth coil and the seventh coil, the first magnet is disposed in a middle area of the fifth coil, the second magnet is disposed in a middle area of the seventh coil, and the third magnet is disposed in the middle area of the third coil; or
when the first coil comprises the fourth coil and the fifth coil, the second coil comprises the sixth coil and the seventh coil, and the third coil comprises the eighth coil and the ninth coil, the first magnet is disposed in a middle area of the fifth coil, the second magnet is disposed in a middle area of the seventh coil, and the third magnet is disposed in a middle area of the eighth coil, wherein
the magnet comprises the first magnet, the second magnet, and the third magnet.

11. The system according to claim 9 or 10, wherein the controller is specifically configured to:
obtain a target position of the image sensor based on the first shake data, the second shake data, and the third shake data; and obtain the displacement amount of the image sensor in the first axial direction, the displacement amount of the image sensor in the second axial direction, and the displacement amount of the image sensor in the third axial direction based on the target position and a start position of the image sensor, wherein
the start position of the image sensor is detected through the position detection module.

12. The system according to claim 11, wherein the controller is specifically configured to:
obtain a position signal of the image sensor fed back by the position detection module, wherein the position signal of the image sensor is used to describe a current position of the image sensor;
determine, based on the position signal of the image sensor, whether an error between the current position and the target position of the image sensor is within a preset range; and
when the error between the current position and the target position of the image sensor is not within the preset range, obtain the displacement amount of the image sensor in the first axial direction, the displacement amount of the image sensor in the second axial direction, and the displacement amount of the image sensor in the third axial direction based on the current position and the target position of the image sensor; and
the driver is specifically configured to:
read crosstalk calibration data prestored in the optical image stabilization motor;
search the crosstalk calibration data for a crosstalk compensation amount in the first axial direction, a crosstalk compensation amount in the second axial direction, and a crosstalk compensation amount in the third axial direction;
perform crosstalk compensation on the displacement amount in the first axial direction by using the crosstalk compensation amount in the first axial direction, to obtain a displacement amount in the first axial direction after crosstalk compensation, perform crosstalk compensation on the displacement amount in the second axial direction by using the crosstalk compensation amount in the second axial direction, to obtain a displacement amount in the second axial direction after crosstalk compensation, and perform crosstalk compensation on the displacement amount in the third axial direction by using the crosstalk compensation amount in the third axial direction, to obtain a displacement amount in the third axial direction after crosstalk compensation; and
drive, by using the optical image stabilization motor based on the displacement amount obtained after crosstalk compensation in the first axial direction, the image sensor to move in the first axial direction; drive, by using the optical image stabilization motor based on the displacement amount obtained after crosstalk compensation in the second axial direction, the image sensor to move in the second axial direction; and drive, by using the optical image stabilization motor based on the displacement amount obtained after crosstalk compensation in the third axial direction, the image sensor to move in the second axial direction, wherein
the crosstalk compensation amount in the first axial direction comprises a crosstalk compensation amount of displacement of the image sensor in the second axial direction to displacement of the image sensor in the first axial direction, and a crosstalk compensation amount of displacement of the image sensor in the third axial direction to the displacement of the image sensor in the first axial direction;
the crosstalk compensation amount in the second axial direction comprises a crosstalk compensation amount of the displacement of the image sensor in the first axial direction to the displacement of the image sensor in the second axial direction, and a crosstalk compensation amount of the displacement of the image sensor in the third axial direction to the displacement of the image sensor in the second axial direction; and
the crosstalk compensation amount in the third axial direction comprises a crosstalk compensation amount of the displacement of the image sensor in the first axial direction to the displacement of the image sensor in the third axial direction, and a crosstalk compensation amount of the displacement of the image sensor in the second axial direction to the displacement of the image sensor in the third axial direction.

13. The system according to claim 11, wherein the sensor comprises a gyroscope and an accelerometer.

14. A three-axis optical image stabilization method based on image sensor displacement, applied to a driver chip, wherein the method comprises:
obtaining a displacement amount of an image sensor in a first axial direction, a displacement amount of the image sensor in a second axial direction, and a displacement amount of the image sensor in a third axial direction;
driving, by using an optical image stabilization motor based on the displacement amount in the first axial direction, the displacement amount in the second axial direction, and the displacement amount in the third axial direction, the image sensor to shift in each axial direction, wherein
the optical image stabilization motor comprises a mover of the image sensor, a magnet, a first coil, a second coil, and a third coil, the first coil is disposed on a first side of the mover of the image sensor, the second coil is disposed on a second side of the mover of the image sensor, the third coil is disposed on a third side of the mover of the image sensor, the first side and the second side are opposite sides, and the third side and the first side are adjacent sides; the mover of the image sensor is connected to the image sensor, the image sensor moves with motion of the mover of the image sensor; and the magnet is configured to generate a magnetic field; and
after the first coil, the second coil, and the third coil are energized, generating, under an action of the magnetic field, an acting force acting on the mover of the image sensor, to push the mover of the image sensor to shift in each axial direction.

15. The method according to claim 14, wherein the driving, by using an optical image stabilization motor based on the displacement amount in the first axial direction, the displacement amount in the second axial direction, and the displacement amount in the third axial direction, the image sensor to shift in each axial direction comprises:
applying a first current signal to the first coil based on the displacement amount in the first axial direction, so that the first coil generates, under the action of the magnetic field, a first Lorentz force acting on the mover of the image sensor, wherein the first Lorentz force is used to drive the mover of the image sensor to shift in the first axial direction;
applying a second current signal to the second coil based on the displacement amount in the second axial direction, so that the second coil generates, under the action of the magnetic field, a second Lorentz force acting on the mover of the image sensor, wherein the second Lorentz force is used to generate a rotating torque to drive the mover of the image sensor to rotate in the second axial direction; and
applying a third current signal to the third coil based on the displacement amount in the third axial direction, so that the third coil generates, under the action of the magnetic field, a third Lorentz force acting on the mover of the image sensor, wherein the third Lorentz force is used to drive the mover of the image sensor to shift in the third axial direction, wherein
a first center line of the first coil passes through a center point of the mover of the image sensor, and the first center line passes through a center of the first coil and is parallel to the first axial direction;
a second center line of the second coil does not pass through the center point of the mover of the image sensor, and the second center line passes through a center of the second coil and is parallel to the first axial direction; and
a third center line of the third coil passes through the center point of the mover of the image sensor, and the third center line passes through a center of the third coil and is parallel to the third axial direction.

16. The method according to claim 14, wherein the first coil comprises a fourth coil and a fifth coil, the second coil comprises a sixth coil and a seventh coil, the fourth coil and the sixth coil are disposed opposite to each other, and the fifth coil and the seventh coil are disposed opposite to each other; and
the driving, by using an optical image stabilization motor based on the displacement amount in the first axial direction, the displacement amount in the second axial direction, and the displacement amount in the third axial direction, the image sensor to shift in each axial direction comprises:
applying a fourth current signal to the fourth coil and the sixth coil based on the displacement amount in the first axial direction and the displacement amount in the second axial direction, so that the fourth coil generates, under the action of the magnetic field, a fourth Lorentz force acting on the mover of the image sensor, and the sixth coil generates, under the action of the magnetic field, a fifth Lorentz force acting on the mover of the image sensor;
applying a fifth current signal to the fifth coil and the seventh coil based on the displacement amount in the first axial direction and the displacement amount in the second axial direction, so that the fifth coil generates, under the action of the magnetic field, a sixth Lorentz force acting on the mover of the image sensor, and the seventh coil generates, under the action of the magnetic field, a seventh Lorentz force acting on the mover of the image sensor; and
applying a sixth current signal to the third coil based on the displacement amount in the third axial direction, so that the third coil generates, under the action of the magnetic field, a Lorentz force acting on the mover of the image sensor, to drive the mover of the image sensor to shift in the third axial direction, wherein
the mover of the image sensor shifts in the first axial direction and/or the second axial direction under actions of the fourth Lorentz force, the fifth Lorentz force, the sixth Lorentz force, and the seventh Lorentz force.

17. The method according to claim 16, wherein none of a fourth center line of the fourth coil, a fifth center line of the fifth coil, a sixth center line of the sixth coil, and a seventh center line of the seventh coil passes through a center point of the mover of the image sensor, and a third center line of the third coil passes through the center point of the mover of the image sensor; and
the third center line passes through a center of the third coil and is parallel to the third axial direction, the fourth center line passes through a center of the fourth coil and is parallel to the first axial direction, the fifth center line passes through a center of the fifth coil and is parallel to the first axial direction, the sixth center line passes through the sixth coil and is parallel to the first axial direction, and the seventh center line passes through a center of the seventh coil and is parallel to the first axial direction.

18. The method according to claim 16 or 17, wherein coils of the fourth coil, the fifth coil, the sixth coil, and the seventh coil are all the same; or
a coil size of the fourth coil is the same as a coil size of the sixth coil, a coil size of the fifth coil is the same as a coil size of the seventh coil, and the coil size of the fourth coil is different from the coil size of the fifth coil.

19. The method according to any one of claims 16 to 18, wherein the third coil comprises an eighth coil and a ninth coil; and
the applying a sixth current signal to the third coil based on the displacement amount in the third axial direction, so that the third coil generates, under the action of the magnetic field, a Lorentz force acting on the mover of the image sensor comprises:
applying the sixth current signal to the eighth coil and the ninth coil based on the displacement amount in the third axial direction, so that the eighth coil generates, under the action of the magnetic field, an eighth Lorentz force acting on the mover of the image sensor, and the ninth coil generates, under the action of the magnetic field, a ninth Lorentz force acting on the mover of the image sensor, wherein
the mover of the image sensor shifts in the third axial direction under a joint action of the eighth Lorentz force and the ninth Lorentz force.

20. The method according to claim 19, wherein a distance between the center point of the mover of the image sensor and a center of the eighth coil is equal to a distance between the center point of the mover of the image sensor and a center of the ninth coil.

21. The method according to any one of claims 14 to 20, wherein a gravity center of the mover of the image sensor coincides with a geometric center of the mover of the image sensor.

22. The method according to any one of claims 14 to 21, wherein before the driving, by using an optical image stabilization motor based on the displacement amount in the first axial direction, the displacement amount in the second axial direction, and the displacement amount in the third axial direction, the image sensor to shift in each axial direction, the method further comprises:
reading crosstalk calibration data prestored in the optical image stabilization motor;
searching the crosstalk calibration data for a crosstalk compensation amount in the first axial direction, a crosstalk compensation amount in the second axial direction, and a crosstalk compensation amount in the third axial direction; and
performing crosstalk compensation on the displacement amount in the first axial direction by using the crosstalk compensation amount in the first axial direction, to obtain a displacement amount in the first axial direction after crosstalk compensation, performing crosstalk compensation on the displacement amount in the second axial direction by using the crosstalk compensation amount in the second axial direction, to obtain a displacement amount in the second axial direction after crosstalk compensation, and performing crosstalk compensation on the displacement amount in the third axial direction by using the crosstalk compensation amount in the third axial direction, to obtain a displacement amount in the third axial direction after crosstalk compensation, wherein
the crosstalk compensation amount in the first axial direction comprises a crosstalk compensation amount of displacement of the image sensor in the second axial direction to displacement of the image sensor in the first axial direction, and a crosstalk compensation amount of displacement of the image sensor in the third axial direction to the displacement of the image sensor in the first axial direction;
the crosstalk compensation amount in the second axial direction comprises a crosstalk compensation amount of the displacement of the image sensor in the first axial direction to the displacement of the image sensor in the second axial direction, and a crosstalk compensation amount of the displacement of the image sensor in the third axial direction to the displacement of the image sensor in the second axial direction; and
the crosstalk compensation amount in the third axial direction comprises a crosstalk compensation amount of the displacement of the image sensor in the first axial direction to the displacement of the image sensor in the third axial direction, and a crosstalk compensation amount of the displacement of the image sensor in the second axial direction to the displacement of the image sensor in the third axial direction.

23. A camera module, comprising the three-axis optical image stabilization system based on image sensor displacement according to any one of claims 1 to 13.

24. An electronic device, comprising the three-axis optical image stabilization system based on image sensor displacement according to any one of claims 1 to 13.

25. A chip system, wherein the chip system comprises a processor, the processor is coupled to a memory, and the processor executes a computer program stored in the memory, to implement the method according to any one of claims 14 to 22.

26. A computer-readable storage medium, wherein the computer-readable storage medium stores a computer program, and when the computer program is executed by a processor, the method according to any one of claims 14 to 22 is implemented.
